# FASCICULE DE BREVET EUROPEEN

(11) **EP 2 012 914 B1**
(45) Date de publication et mention de la délivrance du brevet: **18.12.2013**
(21) Numéro de dépôt: 07728398.4
(22) Date de dépôt: 23.04.2007
(51) Int. Cl.: B01J 8/18, B01J 8/36, B01J 8/14

(54) **DISPOSITIF ET PROCEDE D'INJECTION DE FLUIDE DANS UN LIT FLUIDIFIE ROTATIF**
VORRICHTUNG UND VERFAHREN ZUM EINSPRITZEN VON FLUID IN EIN ROTIERENDES WIRBELBETT
DEVICE AND METHOD FOR INJECTING FLUID INTO A ROTATING FLUIDIZED BED

(30) Priorité: 21.04.2006 EP 06008351; 02.03.2007 EP 07103440
(43) Date de publication de la demande: 14.01.2009
(73) Titulaire: De Broqueville, Axel, 1390 Grez-Doiceau (BE)
(72) Inventeur: DE BROQUEVILLE, Axel, B-1390 Grez-Doiceau (BE); DE WILDE, Juray, B-9000 Gent (BE)
(86) Numéro de dépôt international: PCT/EP2007/053941
(87) Numéro de publication internationale: WO 2007/122211

(56) Documents cités:
- WO-A-2005/099887
- WO-A-2006/063964
- WO-A-2006/063965
- WO-A-2007/031573
- WO-A2-2006/064046

## Description

### Domaine technique de l'invention

La présente invention se rapporte à un dispositif à lit fluidifié rotatif comprenant un dispositif rotatif d'évacuation du ou des fluides traversant le lit fluidifié rotatif. En particulier, la présente invention se rapporte à un dispositif d'évacuation, au travers d'une cheminée centrale rotative, d'un ou plusieurs fluides, gazeux ou liquides, d'une chambre de réaction circulaire rotative ou fixe le long de laquelle le ou les fluides sont injectés et font tourner un lit fluidifié en le traversant. La présente invention se rapporte aussi à des procédés de polymérisation catalytique, de séchage, d'imprégnation, d'enrobage, de combustion, de gazéification, de classification ou d'autres traitements de particules solides en suspension dans un lit fluidifié rotatif, ou de craquage, de déshydrogénation ou d'autres transformations catalytiques de fluides utilisant ce dispositif.

### Arrière plan technologique de l'invention

Pour obtenir un lit fluidifié dense, traversé par un flux de fluide, il faut que la pression exercée par le fluide sur les particules solides soit compensée par une force opposée qui est la pesanteur dans les lits fluidifiés classiques et la force centrifuge dans les lits fluidifiés rotatifs. Si les particules sont de très petites dimensions, par exemple les poudres du groupe C de la classification de Geldart, ou si la densité du fluide est proche de celle des particules solides, par exemple lorsque le fluide est un liquide, il faut que la force centrifuge soit très élevée et/ou que le flux de fluide traversant le lit fluidifié soit peu élevé.

Il est facile d'obtenir un lit fluidifié rotatif en le supportant sur un cylindre poreux rotatif, mais la non uniformité du lit fluidifié peut entraîner de fortes vibrations limitant la vitesse de rotation de ce dispositif et l'alimentation et l'évacuation de particules solides sans être entraînées par le fluide ne sont pas aisées, lorsque les particules solides sont très fines. Il est également possible d'obtenir un lit fluidifié rotatif dans une chambre circulaire fixe en injectant le fluide en couches minces le long de la paroi circulaire fixe et en l'évacuant par des ouvertures d'une cheminée centrale traversant la chambre circulaire. Un tel dispositif est décrit dans la demande_internationale de brevet WO-A-2005/099887 au nom d'un des inventeurs de la présente demande.

Dans ce dernier dispositif, pour augmenter la vitesse de rotation des particules solides il faut augmenter le débit de fluide et/ou diminuer la distance entre la paroi circulaire et la cheminée centrale et/ou réduire la section des injecteurs de fluide pour augmenter la vitesse d'injection à débit constant. En pratique le frottement du fluide le long de la cheminée centrale fait qu'il est difficile d'obtenir une force centrifuge très élevée à proximité de la cheminée centrale avec un débit de fluide pas trop élevé, ce qui peut provoquer l'entraînement des particules solides les plus fines dans la cheminée centrale.

### Sommaire de l'invention

La présente invention comprend un dispositif d'alimentation et d'évacuation de particules solides dans une chambre de réaction circulaire rotative ou fixe et un dispositif d'alimentation (également appelé dispositif d'injection) d'un ou plusieurs fluides, gazeux ou liquides, permettant d'injecter tout ou partie du ou des fluides le long de la paroi circulaire fixe ou rotative de la chambre de réaction, sous la forme de jets de fluide, de préférence dans des directions formant un angle inférieur à 45° avec les plans tangents à la paroi circulaire, ou en une succession de couches minces longeant la paroi circulaire fixe, afin de faire tourner le long de la paroi circulaire fixe ou rotative ce ou ces fluides qui entraînent les particules solides dans un mouvement de rotation dont la force centrifuge les pousse vers la paroi circulaire fixe le long de laquelle elles forment un lit fluidifié rotatif. Elle comprend en outre un dispositif d'évacuation de ce ou ces fluides comprenant un tube central rotatif, également appelé cheminée centrale rotative ou chambre centrale d'évacuation, traversant ou pénétrant longitudinalement à l'intérieur de la chambre de réaction circulaire fixe ou rotative, ce tube central rotatif comprenant une ou plusieurs ouvertures permettant l'évacuation centrale de ce ou ces fluides et tournant dans le même sens et de préférence plus rapidement que la vitesse moyenne du ou des fluides et du lit fluidifié rotatif afin d'augmenter la force centrifuge qui repousse vers la paroi circulaire rotative ou fixe les particules solides qui sont entraînées par le ou les fluides vers la cheminée centrale.

En particulier, la présente invention se rapporte à dispositif à lit fluidifié rotatif comprenant :
- un dispositif d'alimentation dans une chambre circulaire d'un ou plusieurs fluides, gazeux ou liquides, disposé autour de la paroi circulaire extérieure de ladite chambre circulaire et un dispositif d'évacuation permettant d'évacuer centralement le ou lesdits fluides,
- un dispositif d'alimentation de particules solides dans ladite chambre circulaire et un dispositif d'évacuation desdites particules solides,
- ledit dispositif d'alimentation du ou desdits fluides comprend des ouvertures d'injection de fluide traversant ladite paroi circulaire extérieure permettant d'injecter le ou lesdits fluides, caractérisé en ce que :
- ledit dispositif d'évacuation du ou desdits fluides comprend un tube central rotatif traversant ou pénétrant longitudinalement à l'intérieur de ladite chambre circulaire, ledit tube central rotatif comprenant une ou des ouvertures d'évacuation traversant la paroi dudit tube central permettant d'évacuer centralement le ou lesdits fluides de ladite chambre circulaire, par ledit tube central rotatif.

De préférence ledit dispositif d'alimentation du ou desdits fluides comprend des ouvertures d'injection de fluide traversant ladite paroi circulaire extérieure permettant d'injecter le ou lesdits fluides dans une direction dont la composante principale est tangente à ladite paroi circulaire.

Selon un mode de réalisation particulier, la présente invention se rapporte à dispositif à lit fluidifié rotatif comprenant :- un dispositif d'alimentation dans une chambre circulaire d'un ou plusieurs fluides, gazeux ou liquides, disposé autour de la paroi circulaire extérieure de ladite chambre circulaire et un dispositif d'évacuation permettant d'évacuer centralement le ou lesdits fluides, - un dispositif d'alimentation de particules solides dans ladite chambre circulaire et un dispositif d'évacuation desdites particules solides, caractérisé en ce que: - ledit dispositif d'alimentation du ou desdits fluides comprend des ouvertures d'injection de fluide traversant ladite paroi circulaire extérieure permettant d'injecter le ou lesdits fluides dans une direction dont la composante principale est tangente à ladite paroi circulaire, - ledit dispositif d'évacuation du ou desdits fluides comprend un tube central rotatif traversant ou pénétrant longitudinalement à l'intérieur de ladite chambre circulaire, ledit tube central rotatif comprenant une ou des ouvertures d'évacuation traversant la paroi dudit tube central permettant d'évacuer centralement le ou lesdits fluides de ladite chambre circulaire, par ledit tube central rotatif.

Le tube central rotatif peut être équipé de palettes ou d'ailettes extérieures permettant d'accélérer la vitesse de rotation d'une couche de fluide qui l'entoure, qui a de préférence un diamètre inférieur à celui du lit fluidifié et qui ne contient pas ou peu de particules solides, ce qui permet une vitesse de rotation très élevée et donc de produire sur les particules solides les plus fines, entraînées par le ou les fluides à proximité de ce tube central rotatif, des forces centrifuges très élevées, de préférence supérieures à la force centripète moyenne exercée par ce ou ces fluides sur ces particules solides et ainsi de les repousser vers le lit fluidifié rotatif. Ceci permet d'obtenir des lits fluidifiés rotatifs composés de ou contenant des particules très fines et traversés par une grande quantité de fluides.

Selon un mode de réalisation particulier, lesdites ouvertures d'évacuation traversant ladite paroi dudit tube central rotatif sont orientées radialement ou dans le même sens de rotation que ledit tube central rotatif.

Selon un mode de réalisation particulier, la paroi circulaire extérieure de ladite chambre circulaire est fixe. Selon un autre mode de réalisation particulier, la paroi circulaire extérieure de ladite chambre circulaire est rotative. De préférence, la paroi circulaire extérieure de ladite chambre circulaire peut tourner dans le même sens et à une vitesse de rotation inférieure à la vitesse de rotation dudit tube central rotatif. La chambre de réaction circulaire (ou chambre annulaire) peut donc être fixe, ce qui veut dire que sa paroi circulaire (ou paroi circulaire extérieure) est fixe ou peut être rotative, ce qui veut dire que sa paroi circulaire extérieure est rotative, elle est reliée à un moteur pouvant la faire tourner.

Selon un mode de réalisation particulier, lesdites ouvertures d'injection de fluide traversant ladite paroi circulaire extérieure rotative sont orientées dans le même sens que le sens de rotation dudit tube central rotatif.

Selon un autre mode de réalisation particulier, la ou les ouvertures d'injection de fluide traversant ladite paroi circulaire extérieure sont orientées dans le sens inverse du sens de rotation de la paroi circulaire extérieure et du tube central rotatif. Selon un mode de réalisation particulier, la ou les ouvertures d'évacuation traversant ladite paroi dudit tube central rotatif sont orientées dans le sens ou radialement au sens de rotation de la paroi circulaire extérieure et de la paroi dudit tube central.

Selon un autre mode de réalisation particulier, la paroi circulaire extérieure de ladite chambre circulaire est fixée audit tube central rotatif délimitant ainsi une chambre annulaire rotative. De préférence, dans ce cas, les ouvertures d'injection de fluide traversant ladite paroi circulaire extérieure sont orientées dans le sens inverse du sens de rotation de la paroi circulaire extérieure et du tube central rotatif

Dans la présente invention, les sections transversales de la chambre circulaire rotative ou fixe peuvent être des cercles, des ellipses, des polygones ou d'autres formes de courbures variables afin de faire varier la force centrifuge sur les particules solides qui tournent le long de cette surface, et la surface de ces sections transversales peut être constante ou varier progressivement ou par palier afin de faire varier l'épaisseur du lit fluidifié. La chambre circulaire peut avoir une forme cylindrique, polygonale, conique ou d'autres formes de courbures variables. Selon un mode de réalisation particulier, la surface intérieure de ladite paroi circulaire extérieure est polygonale.

Que le fluide soit injecté sous la forme de films minces ou de jets de fluide, si sa vitesse d'injection est très élevée, lorsque les particules solides qui longent la paroi circulaire entrent en contact avec le fluide, elles sont brutalement écartées de la paroi, pour s'en rapprocher ensuite sous l'effet de la force centrifuge. Les particules solides peuvent ainsi être soumises à des variations de pression et des vibrations rapides et intenses. Cette propriété est particulièrement intéressante lorsqu'il faut empêcher l'agglomération de micro particules sous l'effet des forces de cohésions et pour les particules solides collantes comme les élastomères ou les solides bitumineux. Les variations rapides de pressions permettent également d'améliorer les transferts de masse entre le fluide et les particules solides poreuses.

Selon un mode de réalisation particulier, comme décrit ci-dessus la présente invention concerne aussi un dispositif d'alimentation et d'évacuation de particules solides dans une chambre de réaction circulaire rotative et un dispositif d'injection d'un ou plusieurs fluides, gazeux ou liquides, permettant d'injecter tout ou partie du ou des fluides le long de la paroi circulaire rotative de la chambre de réaction dans une direction opposée au sens de rotation afin de faire tourner le lit de particules solides dans le sens contraire et donc d'y réduire la force centrifuge afin de pouvoir y fluidifier les plus grosses particules solides sans devoir augmenter le débit de fluide au risque d'entraîner les plus petites particules dans le dispositif d'évacuation du fluide.

Dans la présente invention, le dispositif peut aussi comprendre une chambre fixe d'alimentation à l'intérieur de laquelle se trouve ladite chambre circulaire. Selon un mode de réalisation particulier, le dispositif peut aussi comprendre une chambre fixe d'alimentation d'un ou plusieurs fluides dont l'enveloppe extérieure est fixe et à l'intérieur de laquelle se trouve ladite chambre annulaire fixe ou rotative contenant des particules solides, délimitée par deux parois cylindriques ou circulaires concentriques, reliées entre elles par les deux côtés latéraux. Selon un mode de réalisation particulier, le dispositif peut aussi comprendre une chambre fixe d'alimentation dont l'enveloppe extérieure est fixe et à l'intérieur de laquelle tourne rapidement autour de son axe de symétrie une chambre annulaire rotative délimitée par deux parois cylindriques ou circulaires concentriques, reliées entre elles par les deux côtés latéraux.

Selon un mode de réalisation particulier, la paroi circulaire extérieure est munie d'ouvertures d'injection de fluide, régulièrement répartis le long de sa surface, permettant d'alimenter le ou les fluides dans la chambre annulaire et la paroi circulaire intérieure (tube central rotatif) est munie d'ouvertures d'évacuation permettant d'évacuer le ou les fluides vers une chambre centrale d'évacuation, qui est l'espace rotatif à l'intérieur de la paroi circulaire intérieure et qui est reliée à un ou plusieurs tubes fixes d'évacuation, relié à un dispositif d'évacuation du ou des fluides.

Selon un mode de réalisation particulier, le ou les fluides venant de la chambre d'alimentation et traversant la paroi circulaire extérieure est ou sont injectés dans le sens contraire du mouvement de rotation afin de faire tourner à contresens les particules solides qui s'accumulent le long de cette paroi sous l'effet de la force centrifuge et donc d'y diminuer la force centrifuge pour faciliter la fluidisation de ces particules solides, généralement les plus grosses ou les plus lourdes, sans diminuer la force centrifuge s'exerçant sur les particules solides, généralement les plus fines ou les plus légères, qui sont entraînées à proximité de la paroi circulaire intérieure sous l'effet de la pression centripète du ou des fluides traversant le lit de particules solides fluidifiées.

Selon un mode de réalisation particulier, afin d'obtenir des flux de fluides régulièrement répartis en couches successives tout le long de la paroi circulaire extérieure, les ouvertures d'injection de fluides peuvent avoir la forme de longues fentes longitudinales, suffisamment fines pour que la vitesse d'injection du ou des fluides soit d'au moins la moitié de la vitesse de rotation de la paroi circulaire extérieure et de préférence au moins égale à cette vitesse. Lesdites ouvertures d'injection de fluide comprennent des fentes longitudinales et sont de préférence espacées de distances inférieures au double de la distance moyenne entre la paroi circulaire extérieure et ladite paroi dudit tube central. Afin d'éviter de grandes différences non souhaitées des flux de fluides entre différentes portions de la paroi circulaire extérieure, la chute de pression du fluide au travers de ces ouvertures d'injection de fluides est de préférence supérieure au cinquième de la pression centrifuge moyenne des particules solides sur la paroi circulaire extérieure et cette chute de pression est de préférence obtenue au moyen d'étranglements suivis d'une expansion brutale, non aérodynamique, du ou des fluides générant de la turbulence et donc une chute de pression approximativement proportionnelle au carré du flux du ou des fluides. Cette expansion brutale du ou des fluides est de préférence orientée dans une direction longitudinale et/ou radiale, et de préférence à une petite distance, du même ordre de grandeur que la largeur de l'ouverture d'injection du ou desdits fluides, avant leur rencontre avec les particules solides, afin d'améliorer la fluidisation et donc l'homogénéité du lit fluidifié.

Selon un mode de réalisation particulier, les ouvertures traversant la paroi du tube central rotatif pour évacuer le ou les fluides dans la chambre centrale d'évacuation sont de préférence orientées dans le sens de rotation des parois circulaires pour que le ou les fluides pénètrent dans ces ouvertures avec une vitesse tangentielle qui s'ajoute à la vitesse de rotation de cette paroi, ce qui augmente la force centrifuge sur les particules solides entraînées par le fluide et réduit donc leur probabilité d'être entraînée dans la chambre rotative d'évacuation du fluide. Afin d'éviter des différences non souhaitées des flux de fluides évacués par les ouvertures réparties le long des de la surface circulaire intérieure, ces ouvertures peuvent aussi comprendre des étranglements suivis d'expansion brutale, non aérodynamique pour générer de la turbulence et une chute de pression approximativement proportionnelle au carré de ces flux.

Selon ce mode de réalisation particulier, les ouvertures d'évacuation de la paroi circulaire intérieure peuvent être délimitées par des aubes qui peuvent être planes ou courbes. L'angle formé par la tangente à un bord de la section transversale d'une aube en un point donné et par la tangente à la circonférence passant par ce point et dont le centre est l'axe de rotation est appelé indifféremment ci-après l'inclinaison ou l'angle d'incidence en ce point de la surface de cette aube. Cette inclinaison varie généralement le long de la surface des aubes. Selon un mode de réalisation particulier, la ou lesdites ouvertures d'évacuation sont délimitées par une ou des aubes creuses pouvant être alimentées en fluides au travers d'un tube central pouvant servir d'arbre de transmission. Selon un mode de réalisation particulier, la ou lesdites ouvertures d'évacuation sont délimitées par une ou des aubes dont la surface intérieure de leurs extrémités extérieures a une inclinaison ou angle d'incidence supérieur à 45°. Selon un mode de réalisation particulier, la ou lesdites ouvertures d'évacuation sont délimitées par une ou des aubes dont la surface extérieure de leurs extrémités intérieures a une inclinaison ou angle d'incidence supérieur à 45°. Selon un mode de réalisation particulier, la ou lesdites ouvertures d'évacuation sont délimitées par une ou des aubes dont la surface extérieure de leurs partie médiane a une inclinaison ou angle d'incidence inférieur à 30°. Les particules solides glissent le long de la surface des aubes lorsque l'inclinaison est faible et elles sont repoussées vers la surface circulaire extérieure lorsque l'inclinaison est forte et que la vitesse de rotation génère une force centrifuge supérieure à la pression centripète du fluide. Dans un mode particulier de réalisation favorisant la séparation du lit fluidifié en deux zones concentriques, une zone extérieure où se concentrent les grosses particules (ou les plus lourdes) le long de la paroi circulaire extérieure et une zone intérieure, autour des aubes formant la paroi circulaire intérieure, où se concentrent les particules les plus fines (ou les plus légères), les aubes ont une forte inclinaison, de préférence supérieure à 45° le long de la partie extérieure des aubes et une inclinaison relativement faible, de préférence inférieure à 30°, le long de sa partie médiane, afin, dans un premier temps, de ralentir la rotation à contre sens des particules solides qui s'approchent de la surface circulaire intérieure, et ensuite de les accélérer par la force d'aspiration du fluide dans le sens de rotation de la chambre annulaire pour augmenter la force centrifuge et empêcher ces particules de pénétrer dans la chambre centrale d'évacuation. Afin d'éviter que les tourbillons générés par les variations des vitesses tangentielles des particules solides le long des aubes génèrent des instabilités du lit fluidifié, la distance entre l'extrémité extérieure d'une aube et l'aube qui la suit est de préférence inférieure à la distance qui sépare cette extrémité extérieure de la surface circulaire extérieure.

Dans la présente invention, ladite paroi circulaire intérieure peut comprendre des aubes creuses pouvant être alimentées en fluide au travers d'un tube central ou arbre de transmission entraînant ladite paroi circulaire rotative, ledit fluide étant injecté à l'intérieur de la chambre centrale rotative d'évacuation, de préférence dans le sens de rotation, au travers d'ouvertures dans les dites aubes creuses. Selon un mode de réalisation particulier, lesdites aubes creuses peuvent comprendre des ouvertures permettant d'injecter le ou lesdits fluides dans la direction de rotation dans ledit tube central rotatif.

Dans la présente invention, la chambre centrale rotative d'évacuation peut être prolongée au-delà de la chambre circulaire par au moins un tube rotatif, de préférence évasé, capable de tourner à l'intérieur d'une chambre de séparation faisant office de cyclone, cela afin de concentrer le long de sa paroi intérieure, les particules solides entraînées par le fluide et de les séparer du fluide, dans une chambre de séparation ou cyclone, avant l'évacuation du fluide par le tube fixe d'évacuation.

Dans la présente invention, les particules solides peuvent être alimentées dans la chambre annulaire rotative au travers de sa paroi circulaire intérieure par un ou plusieurs tubes passant par la chambre centrale d'évacuation du fluide.

Dans la présente invention, les particules solides peuvent être évacuées au travers de la chambre d'alimentation par une ou plusieurs ouvertures dans la paroi circulaire extérieure ou les côtés de la chambre annulaire. Ces ouvertures sont de préférence reliées à des tubes qui tournent avec la paroi circulaire extérieure permettant, grâce à la force centrifuge, d'évacuer les particules solides dans une portion isolée de la chambre d'alimentation de fluide, ladite portion, appelée zone d'évacuation, étant de préférence maintenue à une pression inférieure à la pression de la chambre d'alimentation afin d'éviter le transfert de particules solides vers la chambre d'alimentation.

Dans la présente invention la position des ouvertures de sortie des particules solides peut permettre de contrôler l'épaisseur du lit fluidifié ou la concentration moyenne des particules solides dans la chambre annulaire rotative ainsi que le type de particules évacuées, les plus grosses s'accumulant généralement le long de la paroi circulaire extérieure et les plus fines à proximité de la paroi circulaire intérieure.

Dans la présente invention, la chambre annulaire rotative peut être divisée en plusieurs tronçons annulaires traversés par des fluides de compositions différentes et/ou à des températures différentes, lesdits fluides étant alimentés et évacués séparément.

Le dispositif selon la présente invention, comprenant un tube central rotatif dans une chambre de réaction rotative ou fixe, pouvant optionnellement quand la chambre de réaction est rotative comprendre un dispositif d'injection de fluide dans le sens contraire du sens de rotation du réacteur rotatif supportant un lit fluidifié rotatif, est particulièrement adapté aux procédés à lit fluidifié comprenant des mélanges de particules solides dont les dimensions et/ou poids spécifiques ont une distribution large, rendant leur fluidisation difficile. Ainsi il est avantageux pour classifier des mélanges de particules solides de tailles ou de poids spécifiques substantiellement différents.

Selon un mode de réalisation particulier, ledit dispositif à lit fluidifié rotatif comprend un dispositif d'évacuation de particules solides passant par un ou plusieurs tubes traversant une dite paroi latérale ou ladite paroi circulaire extérieure. Ce dispositif d'évacuation déverse lesdites particules solides avec l'aide de la force centrifuge dans une zone d'évacuation séparée d'une chambre fixe d'alimentation par un dispositif de séparation. Selon un mode de réalisation particulier Selon un mode de réalisation particulier, l'entrée d'au moins un desdits tubes est à une distance de ladite paroi circulaire intérieure inférieure à la moitié de la distance moyenne entre ladite paroi circulaire extérieure et intérieure. Selon un mode de réalisation particulier, l'entrée d'au moins un desdits tubes est à une distance de ladite paroi circulaire extérieure inférieure à la moitié de la distance moyenne entre ladite paroi circulaire extérieure et la paroi dudit tube central rotatif.

Le dispositif selon la présente invention convient particulièrement bien aux procédés où les particules solides subissent une forte attrition, comme la combustion ou gazéification de biomasses ou autres particules carbonées et aux procédés où les particules solides grossissent substantiellement, comme la polymérisation de particules catalytiques et l'enrobage de microparticules.

La quantité de gaz traversant le lit fluidifié pouvant être de plusieurs ordres de grandeur supérieure à la quantité de gaz traversant les lits fluidifiés non rotatifs, avec des temps de résidence extrêmement court, ce dispositif convient particulièrement bien aux procédés impliquant de très grandes vitesses de réaction ou des réactions en dehors de l'équilibre.

Le lit fluidifié pouvant être traversé par des fluides à des températures et/ou de compositions différentes ou variant progressivement, ce dispositif convient aussi pour la copolymérisation de particules catalytique ou pour l'enrobage et le séchage progressif de poudres ou de grains dont la distribution granulométrique est large.

La présente invention concerne aussi un procédé de polymérisation catalytique, de combustion, de gazéification, de classification, d'imprégnation, d'enrobage, de séchage ou autres traitements de particules solides en suspension ou de transformation catalytique de fluides dans un dispositif à lit fluidifié rotatif suivant la présente invention, caractérisé en ce qu'il comprend les étapes qui consistent à : injecter un ou des fluides dans une chambre circulaire rotative ou fixe contenant lesdites particules solides au travers des dites ouvertures d'injection de fluide de la paroi circulaire extérieure, et à évacuer le ou lesdits fluides centralement de ladite chambre circulaire dans un tube central rotatif par une ou des ouvertures d'évacuation.

Selon un mode de réalisation particulier, le procédé comprend l'injection du ou des fluides dans la chambre circulaire rotative ou fixe au travers desdites ouvertures d'injection dans une direction et à une vitesse dont la composante principale est opposée et au moins égale à la moitié de la vitesse de rotation dudit tube central rotatif et l'évacuation du ou desdits fluides centralement de ladite chambre circulaire par lesdites ouvertures d'évacuation dans une direction dont la composante principale est dans le sens ou radiale au sens de rotation dudit tube central rotatif.

Selon un mode de réalisation particulier, le ou lesdits fluides subissent une expansion brutale, avec génération de turbulence, dans une direction longitudinale et/ou une expansion brutale, avec génération de turbulence, dans une direction radiale à l'intérieur des ouvertures d'injection de fluide avant d'entrer en contact avec lesdites particules solides circulant à l'intérieure de ladite chambre circulaire.

Selon un mode de réalisation particulier, la chute de pression moyenne du ou desdits fluides traversant ladite paroi circulaire extérieure par lesdites ouvertures d'injection de fluide est au moins égale à un cinquième de la pression centrifuge moyenne desdites particules solides sur ladite paroi circulaire extérieure.

Selon un mode de réalisation particulier, le procédé est caractérisé en ce que ledit dispositif à lit fluidifié rotatif comprend un dispositif d'évacuation de particules solides passant par un ou plusieurs tubes traversant une dite paroi latérale ou ladite paroi circulaire extérieure et qui déverse lesdites particules solides avec l'aide de la force centrifuge dans une zone d'évacuation séparée d'une chambre fixe d'alimentation par un dispositif de séparation.

Selon un mode de réalisation particulier, le procédé est caractérisé en ce qu'il comprend l'étape qui consiste à recycler le ou lesdits fluides. Selon un mode de réalisation particulier, le procédé est caractérisé en ce qu'il comprend l'étape qui consiste à recycler lesdites particules solides.

Selon un mode de réalisation particulier, le procédé comprend les étapes qui consistent à pulvériser un liquide en fines gouttelettes sur lesdites particules solides et à faire réagir chimiquement ledit liquide imprégnant ou entourant lesdites particules avec le ou lesdits fluides gazeux traversant ledit lit fluidifié rotatif.

La présente invention concerne également l'utilisation d'un dispositif selon la présente invention dans un procédé de polymérisation. De préférence un desdits fluides contient des alpha oléfines. La présente invention concerne également l'utilisation d'un dispositif selon la présente invention dans un procédé de gazéification. La présente invention concerne également l'utilisation d'un dispositif selon la présente invention dans un procédé de combustion de biomasses ou autres particules solides carbonées. La présente invention concerne également l'utilisation d'un dispositif selon la présente invention dans un procédé de transformation catalytique d'un fluide ou mélange de fluides traversant un lit fluidifié rotatif dont les particules solides sont des catalyseurs. Selon un mode de réalisation particulier, ledit fluide ou mélange de fluides contient des oléfines et que ladite transformation catalytique implique le changement de la distribution des poids moléculaires desdites oléfines. Selon un autre mode de réalisation particulier, ledit fluide ou mélange de fluides contient de l'éthylbenzène et que ladite transformation catalytique implique sa déshydrogénation pour le transformer en styrène. De préférence, lesdites particules solides contiennent des composants qui peuvent réagir avec l'hydrogène provenant de ladite déshydrogénation, afin d'en réduire la concentration dans ledit fluide ou mélange de fluides, ces dits composants pouvant être régénérés à l'extérieur de ladite chambre annulaire rotative. La présente invention concerne aussi l'utilisation d'un dispositif selon la présente invention dans un procédé de séchage ou d'extraction de composants volatils desdites particules solides. Un dispositif suivant la présente invention peut également être utilisé dans un procédé d'imprégnation ou d'enrobage desdites particules solides. De préférence, lesdites particules solides sont des grains, de la poudre ou autres fragments d'origine organique.

D'autres caractéristiques et exemples de dispositifs et procédés suivant la présente invention sont décrits ci-dessous de façon non limitative.

### Brève description des dessins

La figure 1a montre une section transversale schématique d'un exemple de chambre circulaire ayant une paroi circulaire fixe traversée par des injecteurs de fluide, ladite chambre circulaire comprenant une cheminée centrale rotative, selon un mode de réalisation particulier de la présente invention.
La figure 1b montre la section longitudinale de l'exemple de la figure 1a.
La figure 2 montre la coupe longitudinale schématique d'un exemple de dispositif à lit fluidifié rotatif ayant une paroi circulaire (2) fixe et une cheminée centrale rotative, selon un mode de réalisation particulier de l'invention.
La figure 3 montre la coupe longitudinale schématique d'un exemple de dispositif à lit fluidifié rotatif ayant une paroi circulaire (2) rotative et une cheminée centrale rotative, selon un mode de réalisation particulier de l'invention.
La figure 4 montre une section transversale schématique d'un exemple de chambre annulaire tournant à l'intérieur d'une chambre fixe, selon un mode de réalisation particulier de la présente invention.
La figure 5 montre la coupe longitudinale schématique d'un exemple de dispositif à lit fluidifié rotatif ayant une paroi circulaire (2) fixe et une cheminée centrale rotative, selon un mode de réalisation particulier de l'invention.
La figure 6 montre une section transversale schématique d'un exemple de chambre annulaire tournant à l'intérieur d'une chambre fixe, avec injection de fluide dans une direction opposée au sens de rotation, selon un mode de réalisation particulier de la présente invention.
La figure 7 montre la section longitudinale schématique de l'exemple de la figure 6.
La figure 8 montre la section transversale schématique d'un exemple d'aubes à angle d'incidence variable, selon un mode de réalisation particulier de la présente invention.
La figure 9a montre une vue frontale schématique d'un exemple d'injection de fluide avec expansion brutale longitudinale et radiale, selon un mode de réalisation particulier de la présente invention.
La figure 9b montre une perspective axonométrique schématique de l'exemple de la figure 9a.
La figure 10a montre une section transversale schématique d'un autre exemple de chambre annulaire, selon un mode de réalisation particulier de la présente invention.
La figure 10b montre un agrandissement de la section schématique d'un exemple d'une fente d'injection de fluide, selon un mode de réalisation particulier de la présente invention.
La figure 11 montre la section longitudinale schématique d'un exemple de chambre annulaire conique, selon un mode de réalisation particulier de la présente invention.
La figure 12 montre la section longitudinale schématique d'un exemple de chambre annulaire divisée en plusieurs tronçons traversés par des fluides alimentés et évacués séparément, selon un mode de réalisation particulier de la présente invention.

### Description détaillée

Selon un mode de réalisation particulier de l'invention, le dispositif à lit fluidifié rotatif comprend :
- un dispositif d'alimentation dans une chambre circulaire fixe d'un ou plusieurs fluides, gazeux ou liquides, disposé autour de la paroi circulaire fixe de ladite chambre circulaire et un dispositif permettant d'évacuer centralement le ou lesdits fluides,
- un dispositif d'alimentation de particules solides dans ladite chambre circulaire et un dispositif d'évacuation desdites particules solides,
- ledit dispositif d'alimentation du ou desdits fluides comprenant des ouvertures réparties le long de ladite paroi circulaire fixe (ou des injecteurs de fluide, répartis autour de ladite paroi circulaire fixe) permettant d'injecter le ou lesdits fluides dans des directions formant de préférence un angle inférieur à 45° avec les plans tangents à ladite paroi circulaire, le ou lesdits fluides pouvant tourner à l'intérieur de ladite chambre circulaire le long de ladite paroi circulaire avant de pouvoir être évacués centralement et pouvant faire tourner lesdites particules solides alimentées par ledit dispositif d'alimentation, caractérisé en ce que:
- ledit dispositif d'évacuation du ou desdits fluides comprend un tube central rotatif (appelé aussi cheminée centrale) traversant ou pénétrant longitudinalement à l'intérieur de ladite chambre circulaire, ledit tube central rotatif pouvant tourner dans le même sens et comprenant au moins une ouverture d'évacuation permettant d'évacuer centralement le ou lesdits fluides de ladite chambre circulaire, par ledit tube central rotatif.

Selon un autre mode de réalisation particulier de l'invention, le dispositif à lit fluidifié rotatif comprend :
- un dispositif d'alimentation dans une chambre circulaire rotative d'un ou plusieurs fluides, gazeux ou liquides, disposé autour de la paroi circulaire rotative de ladite chambre circulaire et un dispositif permettant d'évacuer centralement le ou lesdits fluides,
- un dispositif d'alimentation de particules solides dans ladite chambre circulaire rotative et un dispositif d'évacuation desdites particules solides,
- ledit dispositif d'alimentation du ou desdits fluides comprenant des ouvertures réparties le long de ladite paroi circulaire rotative (ou des injecteurs de fluide, répartis autour de ladite paroi circulaire rotative) permettant d'injecter le ou lesdits fluides dans des directions formant de préférence un angle inférieur à 45° avec les plans tangents à ladite paroi circulaire rotative, le ou lesdits fluides pouvant tourner à l'intérieur de ladite chambre circulaire rotative le long de ladite paroi circulaire avant de pouvoir être évacués centralement et pouvant faire tourner lesdites particules solides alimentées par ledit dispositif d'alimentation, caractérisé en ce que:
- ledit dispositif d'évacuation du ou desdits fluides comprend un tube central rotatif (appelé aussi cheminée centrale) traversant ou pénétrant longitudinalement à l'intérieur de ladite chambre circulaire rotative, ledit tube central rotatif pouvant tourner dans le même sens et comprenant au moins une ouverture d'évacuation permettant d'évacuer centralement le ou lesdits fluides de ladite chambre circulaire rotative, par ledit tube central rotatif.

Selon un autre mode de réalisation particulier de l'invention, le dispositif à lit fluidifié rotatif comprend :
- une chambre fixe d'alimentation à l'intérieur de laquelle se trouve une chambre annulaire (ou chambre circulaire) capable de tourner autour de son axe de symétrie pouvant contenir des particules solides et délimitée par des parois latérales, une paroi circulaire extérieure munie d'ouvertures d'injection de fluide régulièrement réparties le long de sa surface et une paroi circulaire intérieure, munie d'ouvertures d'évacuation;
- une chambre centrale d'évacuation entourée par ladite paroi circulaire intérieure ;
- un dispositif d'alimentation d'un ou plusieurs fluides dans ladite chambre fixe d'alimentation ;
- un dispositif d'évacuation du ou desdits fluides pouvant évacuer le ou lesdits fluides de ladite chambre centrale d'évacuation,
caractérisé en ce que :
- les ouvertures d'injection de fluide traversant ladite paroi circulaire extérieure pour alimenter ladite chambre annulaire avec le ou lesdits fluides sont orientées dans le sens inverse de sens de rotation des parois circulaires intérieure et extérieure et
- les ouvertures d'évacuation traversant ladite paroi circulaire intérieure pour évacuer le ou les fluides dans la chambre centrale d'évacuation sont orientées dans le sens ou radialement au sens de rotation des parois circulaires intérieure et extérieure.

Le terme « injecteur de fluide » se réfère à une ouverture au travers de la paroi circulaire de la chambre circulaire par où un fluide peut pénétrer à l'intérieur de ladite chambre circulaire. Ce passage ou ouverture d'injection peut avoir une forme quelconque, par exemple un tube cylindrique ou de section polygonale. Il est de préférence de forme allongée dans la direction longitudinale (perpendiculaire au plan de rotation). Dans ce cas on parle de « fente d'injection ». Les termes « injecteurs », « ouverture d'injection » ou « fente d'injection » sont utilisés dans certains modes de réalisation de la présente invention comme synonymes.

Les termes « chambre circulaire de réaction » ou « chambre de réaction » ou « chambre annulaire » sont utilisés dans certains modes de réalisation de la présente invention comme synonymes et se réfèrent à une chambre à l'intérieur du réacteur délimitée par deux parois circulaires et des côtés latéraux. Selon un mode de réalisation particulier, le diamètre de la paroi circulaire extérieure au milieu de ladite chambre circulaire est plus grand ou plus petit que le diamètre extérieur d'un de ses côtés. Selon un mode de réalisation particulier, le diamètre de la paroi circulaire intérieure de ladite chambre circulaire est maximum du ou des côtés par où le ou lesdits fluides peuvent être évacués dudit tube central rotatif. Selon un mode de réalisation particulier, la surface de la section transversale au milieu de ladite chambre circulaire est plus grande ou plus petite que la surface transversale d'un de ses côtés.

Selon un mode de réalisation particulier, le diamètre intérieur dudit tube central rotatif est maximum du ou des côtés par où le ou lesdits fluides peuvent être évacués dudit tube central rotatif. Selon un mode de réalisation particulier, ladite chambre circulaire est divisée en au moins deux zones annulaires séparées par des cloisons pourvues d'ouvertures par où lesdites particules solides peuvent passer.

La paroi circulaire intérieure délimite une chambre circulaire intérieure rotative, appelée ici tube central rotatif, permettant d'évacuer le ou lesdits fluides. Les termes « tube central rotatif », « chambre d'évacuation des fluides » ou « cheminée centrale » sont utilisés dans certains modes de réalisation de la présente invention comme synonymes.

Selon un aspect particulier du présent dispositif, au moins une partie desdits injecteurs de fluide injecte le ou lesdits fluides en une succession de couches qui longent ladite paroi circulaire en tournant autour dudit tube central rotatif.

Selon un mode de réalisation particulier, ledit tube central rotatif tourne à une vitesse de rotation supérieure à la vitesse moyenne de rotation du ou desdits fluides.

Selon un mode de réalisation particulier, ledit tube central rotatif comprend des aubes creuses alimentées en fluide au travers d'un tube central ou arbre de transmission entraînant ledit tube central rotatif, ledit fluide étant injecté à l'intérieur de la chambre rotative d'évacuation, de préférence dans le sens de rotation, au travers d'ouvertures dans lesdites aubes creuses.

Selon un mode de réalisation particulier ladite cheminée centrale rotative a une section choisie parmi le cercle, les polygones, et les autres formes de courbures variables. Selon la présente invention, ledit tube central rotatif peut aussi comprendre des palettes, aubes ou ailettes permettant d'entrainer dans un mouvement de rotation la couche de fluide autour dudit tube central rotatif. La vitesse de rotation de ladite couche de fluide peut produire une force centrifuge supérieure à la force centripète moyenne exercée par le ou lesdits fluides sur lesdites particules solides, entraînées par le ou lesdits fluides et pénétrant à l'intérieur de ladite couche de fluide. Selon un mode de réalisation particulier, ledit tube central rotatif est divisé en au moins deux zones reliées à des dispositifs séparés d'évacuation des fluides.

Selon un mode de réalisation particulier, le fluide sortant dudit tube central rotatif en tournant rapidement sur lui-même pénètre dans un tube évasé permettant de séparer ledit fluide des particules solides entraînées par ledit fluide à l'intérieur dudit tube central rotatif.

Selon un mode de réalisation particulier, le dispositif selon la présente invention comprend une chambre fixe d'alimentation à l'intérieur de laquelle se trouve ladite chambre circulaire. Ladite chambre fixe d'alimentation peut être divisée en au moins deux zones annulaires alimentables en fluide séparément.

Le dispositif selon la présente invention, peut aussi comprendre un dispositif de recyclage d'au moins une partie du ou desdits fluides évacués par ledit dispositif d'évacuation du ou desdits fluides vers ledit dispositif d'alimentation du ou desdits fluides. Selon un mode de réalisation particulier, ledit dispositif d'évacuation desdits fluides permet d'évacuer séparément lesdits fluides provenant de sections annulaires successives de ladite chambre circulaire et ledit dispositif de recyclage desdits fluides permet de traiter et d'alimenter séparément dans les mêmes ou dans d'autres dites sections annulaires successives lesdits fluides évacués séparément.

Selon un autre mode de réalisation particulier, le dispositif selon la présente invention est caractérisé en ce que ledit dispositif d'évacuation desdits fluides comprenant ledit tube central rotatif muni de dites palettes, aubes ou ailettes comprend également au moins un tube fixe concentrique et extérieur audit tube rotatif, traversant au moins une dite section annulaire de ladite chambre circulaire et muni d'au moins une ouverture permettant d'évacuer centralement et séparément le ou lesdits fluides provenant de ladite section annulaire, lesdites palettes ou ailettes fixées sur ledit tube central rotatif étant prolongées pour pouvoir tourner autour et à l'extérieur d'au moins une partie dudit tube fixe, permettant ainsi de faire tourner la couche de fluide entourant ledit tube fixe.

Le dispositif selon la présente invention peut aussi comprendre au moins un disque annulaire (49) fixé sur ledit tube central rotatif ou aux dites palettes, aubes ou ailettes, permettant de séparer lesdits fluides qui traversent ledit lit fluidifié rotatif et pénètrent de chaque côté du disque annulaire dans ledit tube central rotatif ou ledit tube fixe concentrique.

Le dispositif selon la présente invention peut aussi comprendre au moins un disque de séparation (29) ou disque annulaire (38.1) divisant le dit tube centrale rotatif en sections séparées permettant d'évacuer séparément les dits fluides qui traversent les différentes sections dudit lit fluidifié rotatif.

Selon un autre mode de réalisation particulier, le dispositif selon la présente invention peut aussi comprendre au moins une spire hélicoïdale fixée sur ledit tube central rotatif ou aux dites palettes, aubes ou ailettes, et pouvant pénétrer dans le lit fluidifié. Ceci permet de déplacer longitudinalement les particules solides proches de la surface du lit fluidifié.

Selon un autre mode de réalisation particulier, le dispositif selon la présente invention comprend au moins une turbine ou compresseur relié audit tube central rotatif par un axe de transmission passant par ledit tube central rotatif et par où passe au moins une partie du ou des fluides évacués.

Ledit dispositif d'évacuation du ou desdits fluides peut aussi comprendre au moins une roue d'une turbine ou d'un compresseur rotatif dont l'axe de rotation est le même que l'axe de rotation dudit tube central rotatif et qui est actionnée par le même dispositif faisant tourner ledit tube central rotatif.

Selon un autre mode de réalisation particulier, la vitesse moyenne de rotation dudit lit fluidifié rotatif génère une force centrifuge d'au moins 10 fois la pesanteur.

Selon un autre mode de réalisation particulier, ledit dispositif d'alimentation du ou desdits fluides comprend des injecteurs de fluides permettant d'injecter des jets de fluide capables de désagréger les particules solides collantes ou soumises à des forces de cohésion et de les empêcher de coller sur les parois de ladite chambre circulaire.

Selon un autre mode de réalisation particulier, ledit dispositif d'alimentation desdites particules solides permet d'injecter les dite particules solides à une vitesse supérieure à la vitesse moyenne desdites particules solides dans ledit lit fluidifié rotatif.

Selon un autre mode de réalisation particulier, ledit dispositif d'alimentation desdites particules solides injecte lesdites particules solides d'un côté de ladite chambre circulaire et en ce que ledit dispositif d'évacuation desdites particules solides évacue les particules solides de l'autre côté de ladite chambre circulaire, ou en ce que ledit dispositif d'alimentation desdites particules solides injecte lesdites particules solides dans la partie centrale de ladite chambre circulaire et en ce que ledit dispositif d'évacuation desdites particules solides évacue les particules solides aux deux extrémités de ladite chambre circulaire, ou en ce que ledit dispositif d'alimentation desdites particules solides injecte lesdites particules solides aux deux extrémités de ladite chambre circulaire et en ce que ledit dispositif d'évacuation desdites particules solides évacue les particules solides au centre de ladite chambre circulaire.

Selon un autre mode de réalisation particulier, le dispositif selon la présente invention peut aussi comprendre au moins un anneau de régulation fixé le long de ladite paroi circulaire à proximité d'un dispositif d'évacuation desdites particules solides et avant ce dernier dans le sens de circulation desdites particules solides, le diamètre intérieur dudit anneau de régulation étant plus grand que le diamètre de la surface souhaitée du lit fluidifié. Selon un mode de réalisation particulier, ledit dispositif d'évacuation desdites particules solides comprend une ouverture au travers d'un côté de ladite chambre circulaire à une distance de ladite paroi circulaire égale ou inférieure à l'épaisseur souhaitée du lit fluidifié. Selon un mode de réalisation particulier, ledit dispositif d'évacuation desdites particules solides comprend un tube ayant une ouverture dans ladite paroi circulaire ou contre ladite paroi circulaire.

Selon un mode de réalisation particulier de l'invention, le dispositif à lit fluidifié rotatif comprend au moins un élément permettant de déplacer longitudinalement lesdites particules solides choisi parmi les déflecteurs ou spires ou fractions de spires hélicoïdales fixés le long de ladite paroi circulaire ou dudit tube central rotatif et les ouvertures d'injection de fluide permettant d'injecter un fluide dans une direction ayant une composante longitudinale. Selon un mode de réalisation particulier, l'axe de rotation dudit lit fluidifié et dudit tube central rotatif forment un angle inférieur à 45° avec la verticale et en ce qu'il comprend un ensemble d'anneaux de séparation ou de spires hélicoïdales qui sont fixés le long de ladite paroi circulaire et dont le diamètre intérieur est supérieur au diamètre souhaité dudit lit fluidifié rotatif. Selon un mode de réalisation particulier, l'axe de rotation dudit lit fluidifié et dudit tube central rotatif forment un angle inférieur à 45° avec la verticale et en ce qu'il comprend un ensemble de spires hélicoïdales qui sont fixés le long dudit tube central rotatif et dont le diamètre extérieur est supérieur au diamètre souhaité dudit lit fluidifié rotatif. Selon un mode de réalisation particulier, lesdits anneaux de séparation ou lesdites spires hélicoïdales sont creux et sont alimentés en fluide par ledit dispositif d'alimentation de fluide, ledit fluide étant injecté dans le sens de rotation dudit lit fluidifié rotatif. Selon un mode de réalisation particulier, le ou lesdits anneaux de régulation ou de séparation ou lesdites spires hélicoïdales comprennent au moins un passage situé contre ladite paroi circulaire permettant le passage desdites particules solides situées d'un côté desdits anneaux de séparation vers l'autre côté sans devoir passer par l'espace situé entre les bords intérieurs et ledit tube central rotatif.
Selon un mode de réalisation particulier de l'invention, le dispositif à lit fluidifié rotatif comprend un dispositif de recyclage desdites particules solides. Selon un mode de réalisation particulier, le dispositif comprend au moins deux dites chambres circulaires successives, lesdites particules solides évacuées d'une desdites chambres circulaires successives étant alimentées dans la suivante.
Selon un mode de réalisation particulier de l'invention, le ou lesdits fluides sont des gaz et en ce qu'il comprend un dispositif d'injection d'un liquide permettant d'injecter ledit liquide sur au moins une partie de la surface dudit lit fluidifié. Selon un mode de réalisation particulier, le ou lesdits fluides sont des gaz et en ce qu'il comprend un dispositif permettant de pulvériser un liquide à l'intérieur dudit tube central rotatif ou dudit tube concentrique fixe.

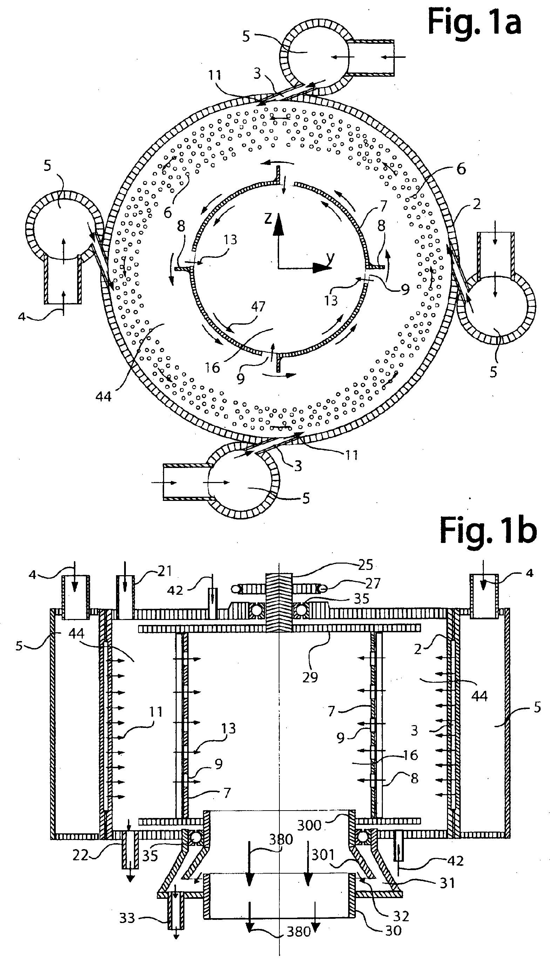

La **figure 1a** montre la coupe transversale d'un exemple selon un mode de réalisation particulier de cette invention comprenant la section de la paroi latérale circulaire fixe (2) traversée par des injecteurs de fluide (3), pouvant être par exemple des tubes généralement de petits diamètres ou des fentes longitudinales, alimentés en fluide (4) par des tubes (5) fixés le long de la paroi (2) et permettant d'injecter un fluide le long de cette paroi (2) dans une direction transversale formant un angle inférieur à 45° avec cette paroi (2). Des particules solides (6) entraînées par le fluide tournent le long de la paroi (2) à l'intérieur de la chambre circulaire ou annulaire (44) et forment ainsi un lit fluidifié rotatif. Les flèches (11) symbolisent le flux de fluide.

La section d'un tube central rotatif (7) équipé de palettes, aubes ou ailettes, ci-après palettes (8), et d'ouvertures d'évacuation du fluide (9), tourne (47) dans le même sens et plus rapidement que le lit de particules solides (6) afin d'accélérer le mouvement de rotation du fluide (13) qui, ayant traversé le lit fluidifié, pénètre à l'intérieur du tube rotatif (7) dans la chambre rotative (16) d'évacuation d'où il est aspiré par un dispositif d'évacuation du fluide. La force centrifuge produite par la rotation rapide du tube et de ses palettes, s'oppose à l'entraînement des particules solides (6) dans les ouvertures (9), ce qui permet de séparer les particules solides du fluide qui a traversé le lit fluidifié avant de l'évacuer. Les palettes (8) peuvent être profilées de manière aérodynamique, par exemple comme des ailettes de turbine, afin de minimiser la turbulence dans leur sillage.

La **figure 1b** montre la coupe longitudinale de l'exemple de la figure 1a. Les particules solides sont injectées dans la chambre circulaire ou annulaire (44) par le tube (21) et sont évacuées de ladite chambre circulaire ou annulaire (44) par le tube (22). Le tube rotatif (7) muni d'ouvertures (9) est relié par un de ses côtés (29) à un arbre (25) entraîné par une poulie (27). Le tube rotatif (7) est prolongé par un tube (300) évasé (301) et pénétrant dans une chambre fixe (31) faisant office de cyclone où les particules solides (32) entraînées par le fluide (13) sont séparées, par la force centrifuge, du fluide (380) qui est évacué séparément par un dispositif d'évacuation. Ces particules solides (32) peuvent être récupérées et évacuées par le tube (33).
Un dispositif symbolisé par les roulements à billes (35) maintiennent ledit tube rotatif et assurent l'étanchéité. Un dispositif (42) permet d'injecter un fluide entre les côtés (29) du tube rotatif et les côtés de la chambre circulaire (44) afin d'empêcher les particules solides de s'approcher des roulements à bille (35).

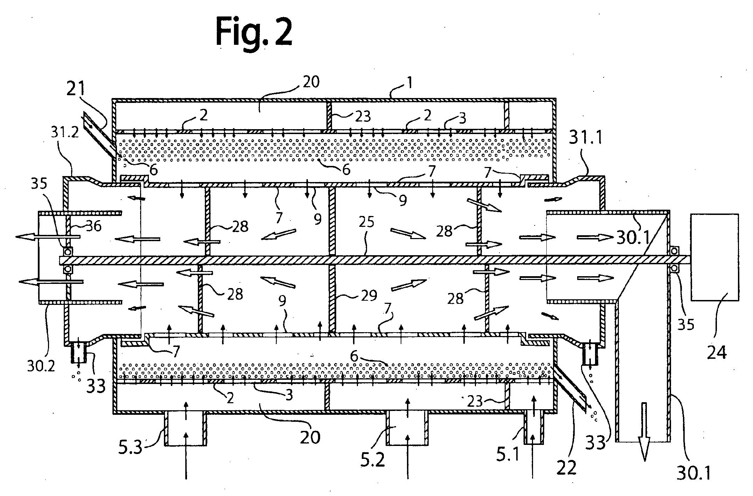

La **figure 2** montre la coupe longitudinale d'un exemple selon un mode de réalisation particulier de l'invention comprenant la section de la paroi latérale circulaire fixe (2) entourée d'une chambre d'alimentation de fluides (20) délimitée par une paroi extérieure fixe (1) alimentée en fluides par les tubes d'alimentation (5.1) à (5.3). Des injecteurs de fluides symbolisés par les ouvertures (3) aménagées dans la paroi circulaire fixe (2) permettent d'injecter les fluides, provenant de la chambre d'alimentation (20), le long de cette paroi circulaire fixe (2) dans une direction transversale formant un angle inférieur à 45° avec cette paroi (2), afin de faire tourner les particules solides (6) qui sont alimentées dans la chambre circulaire par un tube (21) et, sous l'effet de la force centrifuge, de les accumuler dans un lit fluidifié rotatif glissant le long de la paroi circulaire fixe (2).

Les particules solides sont ensuite évacuées par le tube d'évacuation (22) et éventuellement recyclées après traitement adéquat. Le niveau du lit fluidifié peut être régulé par la position de ce tube (22), plus ou moins éloignée de la paroi circulaire et donc plus ou moins proche du tube rotatif (7). Il est aussi possible à l'aide de plusieurs tubes d'évacuation (22), positionnés à des distances différentes de la paroi circulaire, de séparer les particules en fonction de leur dimension ou de leur densité, les particules les plus lourdes ou les plus denses se concentrant le long de la paroi circulaire.

La chambre d'alimentation (20) peut être divisée en plusieurs parties séparées par des cloisons annulaires (23) afin de permettre d'alimenter la chambre circulaire par des fluides de compositions différentes et/ou à des températures différentes.

Le tube central rotatif (7), équipé d'ouvertures d'évacuation des fluides (9) et pourvu éventuellement de palettes ou d'ailettes, non montrées sur la figure, est entraîné dans un mouvement de rotation rapide par le moteur (24) par l'intermédiaire d'un arbre de transmission central (25) auquel il est relié par des rayons (28) permettant le passage du ou des fluide et éventuellement un disque de séparation (29) qui divise le tube central rotatif en deux parties séparées.

Les fluides, qui tournent rapidement, sont évacués de chaque côté du tube central rotatif par les tubes fixes (30.1) et (30.2), en passant éventuellement au travers de cyclones, (31.1) et (31.2) permettant, grâce à la vitesse de rotation des fluides évacués, de séparer les particules solides qui auraient pu pénétrer dans le tube central rotatif et de les récolter par les tubes (33). Les fluides peuvent ensuite être évacués et/ou recyclés dans la chambre d'alimentation (20) après avoir été traités, par exemple refroidis ou réchauffés et séchés ou purifiés, dans des unités de traitement non montrées sur la figure.

L'arbre de transmission central (25) est maintenu par les roulements à billes (35) fixés contre la paroi du tube fixe (30.1) et au centre du tube fixe (30.2) par l'intermédiaire de rayons (36) qui laissent passer le fluide.

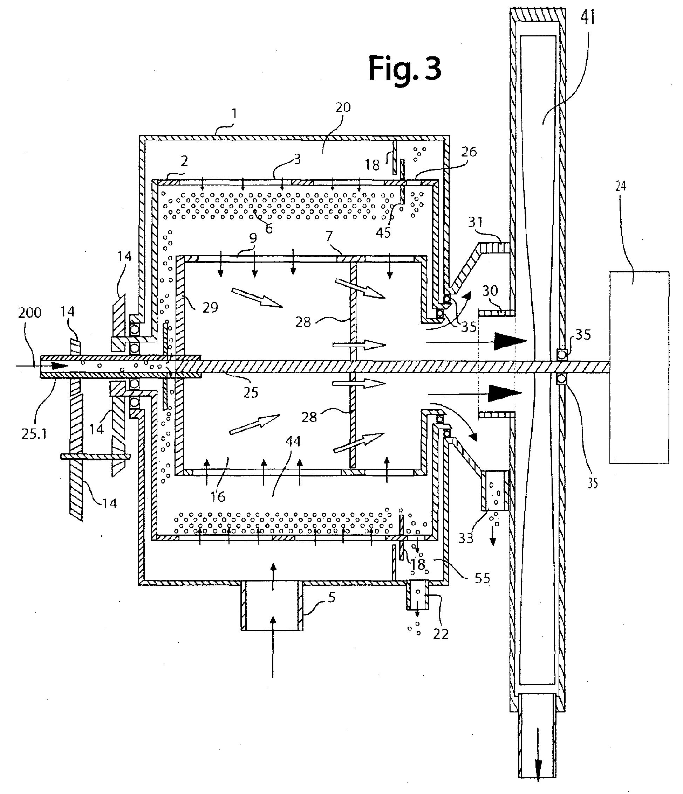

La **figure 3** montre la coupe longitudinale d'une variante selon un mode de réalisation particulier de la présente invention. La chambre d'alimentation de fluides (20) est délimitée par une paroi extérieure fixe (1) alimentée en fluides par un tube d'alimentation (5) et une paroi circulaire rotative (2). Des injecteurs de fluides symbolisés par les ouvertures (3) aménagées dans la paroi circulaire rotative (2) permettent d'injecter les fluides, provenant de la chambre d'alimentation (20), le long de cette paroi circulaire rotative (2) afin de faire tourner les particules solides (6) qui sont alimentées (200) dans la chambre circulaire par l'axe de transmission creux (25.1).

La chambre d'alimentation (20) peut être séparée par un dispositif symbolisé par des anneaux de séparation (18) l'un étant fixé sur la paroi fixe (1) de la chambre d'alimentation et l'autre sur la paroi circulaire rotative (2), de manière plus ou moins étanche, de la chambre d'évacuation (55) des particules solides, évacuées de la chambre (44) par les ouvertures (26), pour empêcher le passage des particules solides vers la chambre d'alimentation (20). Les particules solides sont évacuées de la chambre d'évacuation (55) par le tube (22). L'épaisseur du lit fluidifié est régulée à l'aide d'un anneau de régulation (45).
Le tube central rotatif (7), équipé d'ouvertures d'évacuation des fluides (9) et pourvu éventuellement de palettes ou d'ailettes, non montrées sur la figure, est entraîné dans un mouvement de rotation rapide par le moteur (24) par l'intermédiaire d'un arbre de transmission central (25) auquel il est relié par des rayons (28) permettant le passage du ou des fluides. Un disque plein (29) ferme l'extrémité du tube central rotatif (7) et relie le tube central rotatif (7) à l'arbre de transmission (25) et à son prolongement creux (25.1). L'arbre de transmission (25) est actionné par le moteur (24) qui peut entraîner également la paroi circulaire rotative (2). Des roues dentées (14) schématisent la transmission du mouvement rotatif rapide de l'arbre de transmission (25) vers la paroi circulaire rotative lente (2) avec réduction de la vitesse de rotation.
Les fluides sont aspirés par les ouvertures (9) par exemple par un dispositif d'évacuation du fluide, par exemple par un compresseur centrifuge symbolisé par les pales (41) en passant au travers les rayons (28) qui relient le tube central rotatif (7) à l'arbre de transmission (25). Les fluides, qui tournent rapidement, sont évacués du tube central rotatif par un tube fixe (30) d'évacuation du fluide, en passant éventuellement au travers d'un tube évasé servant de cyclone (31) permettant, grâce à la vitesse de rotation des fluides évacués, de séparer les particules solides qui auraient pu pénétrer dans le tube central rotatif et de les récolter par les tubes (33).
L'arbre de transmission central (25) est maintenu par les roulements à billes (35) symbolisant le dispositif d'étanchéité ou de séparation entre les différents cylindres rotatifs.

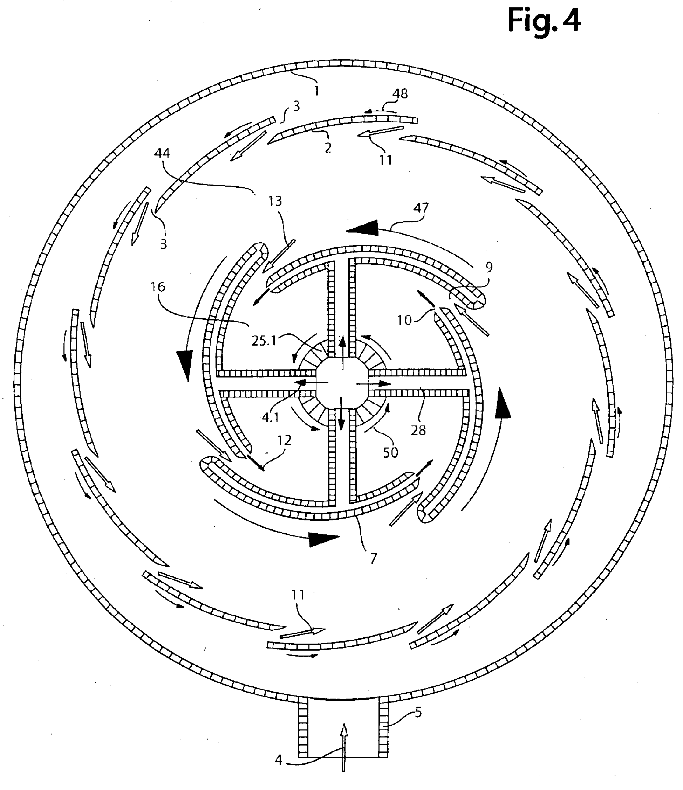

La **figure 4** montre un exemple de section transversale d'un réacteur rotatif selon un mode de réalisation particulier comprenant une paroi extérieure fixe (1) entourant une chambre fixe d'alimentation (20) alimentée en fluide (4) par le tube (5) et une chambre annulaire (44) délimitée par sa paroi circulaire extérieure rotative (2) et sa paroi circulaire intérieure rotative (tube central rotatif) (7) et elle est alimentée en fluide provenant de la chambre d'alimentation (20) au travers des injecteurs ou ouvertures (3) d'injection de fluide. Cette paroi (2) peut être un cylindre rotatif lent et poreux. Dans cet exemple, la paroi rotative (2) est traversée par des injecteurs de fluide (3), pouvant être par exemple des tubes généralement de petits diamètres ou des fentes longitudinales permettant d'injecter un fluide le long de cette paroi extérieure rotative (2).
Le tube central rotatif (7) équipé d'ouvertures d'évacuation (9) du fluide, tourne dans le même sens et plus rapidement que la paroi extérieure rotative (2) afin d'accélérer le mouvement de rotation du fluide qui, ayant traversé le lit fluidifié, est aspiré par le tube (7) au travers de ses ouvertures (9). Les flèches (50) et (47) symbolisent respectivement la rotation de l'arbre de transmission (25) et de la paroi de la cheminée centrale (7) reliée à l'arbre par les rayons (28). Les flèches (48) symbolisent la rotation plus lente de la paroi rotative (2) montrant le sens et l'amplitude de la vitesse de rotation. Les flèches (11) et (13) montrent le sens d'écoulement dudit fluide.
Les aubes (7) formant le tube central rotatif peuvent être creuses et alimentées en fluide (4.1) au travers de l'arbre de transmission (25.1) et des rayons (28) ou de la paroi (29), non visible sur la figure 4, qui peuvent être également creux. Ce fluide (4.1) est injecté (12) par des ouvertures (10) aux extrémités de ces aubes (7) dans le sens de rotation (47) afin d'accélérer les particules solides qui sont entraînées par le fluide (13).
Ce dernier dispositif permet d'augmenter la force centrifuge exercée sur ces particules solides à l'intérieur de la chambre rotative d'évacuation (16) afin de retarder leur entraînement vers la sortie des fluides. Il permet également de refroidir les aubes (7). Il est donc particulièrement avantageux pour les procédés de gazéification ou de combustion de particules solides comme les poussières de charbon ou les biomasses broyées en réduisant la quantité de fluide qui doit être injectée dans la chambre annulaire. Ceci permet d'avoir une température moins élevée dans la chambre annulaire (44) et d'achever la gazéification dans la chambre rotative à la température souhaitée, généralement très élevée.
Ce dispositif d'aubes (7) creuses avec injection de fluide (12) est aussi applicable aux cheminées rotatives dont la paroi circulaire extérieure (2) est fixe ou dont la chambre annulaire est rotative, c'est-à-dire dont la paroi circulaire extérieure tourne à la même vitesse de rotation que la paroi circulaire intérieure.

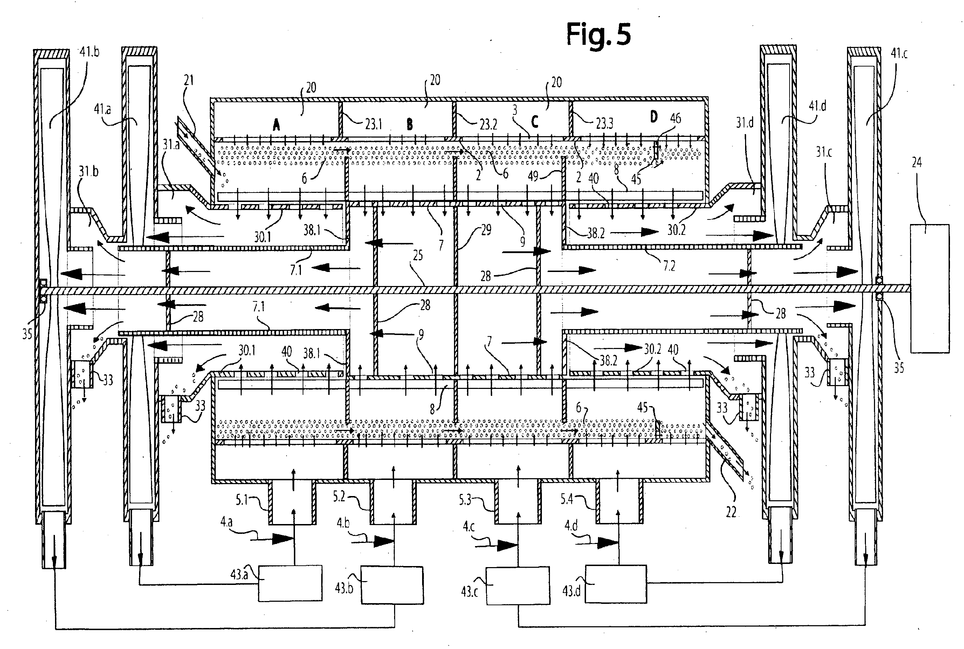

La **figure 5** montre la coupe longitudinale d'une variante de l'invention. La chambre d'alimentation de fluides (20) comprenant une paroi extérieure fixe (1) est divisée en 4 sections A, B, C et D par les cloisons annulaires de (23.1) à (23.3) afin de pouvoir alimenter des fluides de compositions et/ou à des températures et/ou à des pressions différentes au travers de la paroi circulaire fixe (2) par les injecteurs de fluides symbolisés par les ouvertures (3).

Le tube central rotatif (7) est pourvu d'ouvertures (9) uniquement dans les zones délimitées par les sections annulaires B et C. Il est prolongé de chaque côté de ces zones par deux tubes rotatifs de plus petit diamètre (7.1) et (7.2) auxquels il est relié par les disques annulaires (38.1) et (38.2) et par où les fluides peuvent être évacués. Il est équipé de plusieurs palettes ou ailettes (8), qui lui sont fixées et qui se prolongent jusqu'à proximité des deux côtés de la chambre circulaire fixe. Elles sont symbolisées par les rectangles (8).

Le tube central rotatif (7) est également entouré de disques annulaires (49) qui peuvent pénétrer à l'intérieur du lit fluidifié afin de séparer les flux de gaz provenant des différentes sections de la chambre d'alimentation (20) et qui traversent le lit fluidifié. Ces disques annulaires peuvent aussi être des spires hélicoïdales ou leur bord extérieur qui pénètre dans le lit fluidifié peut être équipé d'ailettes qui peuvent faire avancer longitudinalement les particules solides (6) du lit fluidifié.

Les fluides injectés transversalement et approximativement tangentiellement le long de la surface circulaire (2) des sections B et C traversent le lit de particules solides fluidifiées (6) en les faisant tourner le long de la surface circulaire (2). La vitesse de rotation des fluides est ensuite accélérée par les palettes (8), avant qu'ils pénètrent dans le tube central rotatif (7) par les ouvertures (9). Un disque (29) reliant le tube (7) à l'arbre (25) peut diviser le tube en deux parties indépendantes.
Les fluides sont ensuite aspirés respectivement par exemple par des compresseurs centrifuges ou turbines comprenant des aubes (41.b) et (41.c) en passant au travers des rayons (28) qui relient le tube central rotatif (7) à l'arbre de transmission (25) actionné par le moteur (24) qui peut entraîner également les compresseurs centrifuges ou turbines. Les cyclones (31.b) et (31.c) permettent de séparer du fluide les particules solides qui auraient été entraînées par le fluide et de les récolter par les tubes (33).

Les fluides injectés transversalement et approximativement tangentiellement le long de la surface circulaire (2) des sections A et D traversent également le lit de particules solides fluidifiées (6) en les faisant tourner. La vitesse de rotation des fluides est ensuite accélérée par les palettes (8), puis pénètrent par les ouvertures (40) dans les tubes fixes (30.1) et (30.2) entourant les tubes rotatifs (7.1) et (7.2). Ils sont aspirés respectivement par exemple par des compresseurs centrifuges comprenant une roue à aubes (41.a) et (41.d) qui peuvent être entraînées par les tubes rotatifs (7.1) et (7.2). Les ouvertures (40) peuvent être profilées afin de faciliter l'entrée du gaz et de maintenir son mouvement rotatif à l'intérieur des tubes fixes (30.1) et (30.2), afin de permettre la séparation, dans les cyclones (31.a) et (31.d), des fluides et des particules solides, éventuellement entraînées par ces fluides.

Des fluides frais, de (4.a) à (4.d) peuvent être introduits dans les sections de A à D par les tubes d'entrée de (5.1) à (5.4) localisés dans la paroi extérieure (1) de la chambre d'alimentation et les fluides qui ont traversé le lit fluidifié (6) et ont été comprimés par les turbines de (41.a) à (41.d) peuvent être évacués et/ou envoyés dans des unités de traitement de (43.a) à (43.d) et recyclés, soit dans leur section d'origine, de A à D, comme montré sur la figure ou dans une autre section suivant les besoins.

Les particules solides, qui sont alimentées d'un côté de la chambre circulaire (2) par le tube (21) vont remplir progressivement le lit fluidifié (6) et sont ensuite évacuées par le tube (22) situé de l'autre côté. L'épaisseur du lit fluidifié peut être maintenue à un niveau plus ou moins constant à l'aide d'un anneau de régulation (45) disposé contre la paroi circulaire (2) à proximité du tube d'évacuation (22). Cet anneau peut être pourvu d'un ou plusieurs passages (46) permettant aux particules solides les plus grosses ou les plus lourdes, qui ont tendance à se concentrer le long de la paroi annulaire, de passer de l'autre côté de cet anneau de régulation.

L'axe de rotation du lit fluidifié peut être horizontal, incliné ou vertical. Ceci permet d'augmenter la vitesse longitudinale des particules solides et donc de diminuer leur temps de résidence. Si cet axe est fortement incliné ou vertical, l'épaisseur du lit fluidifié est plus grande dans le bas à cause de la pesanteur, ce qui peut limiter la longueur de la chambre circulaire. Dans ce cas il suffit de diviser le lit fluidifié en plusieurs tronçons à l'aide d'anneaux de séparation ou de spires hélicoïdales disposées le long de la paroi circulaire, avec ou sans passages le long de la paroi circulaire pour permettre le passage des particules solides le long de cette paroi.

Ces anneaux ou spires hélicoïdales peuvent être creux et alimentés en fluides injectés dans le sens de la rotation du lit fluidifié le long de la surface de ces anneaux, de préférence du côté supérieur, pour faciliter la rotation des particules solides le long de leur surface. Ils peuvent être également utilisés lorsque l'axe de rotation est horizontal ou légèrement incliné afin de guider les particules solides dans le sens souhaité. Des anneaux ou spires hélicoïdales de plus petit diamètre extérieur peuvent aussi être fixés à la cheminée centrale rotative afin de mieux séparer les flux de fluides provenant de sections différentes et/ou de guider les particules solides dans le sens longitudinal.

Si l'injection du ou des fluides qui traversent rapidement le lit fluidifié rotatif est suffisamment uniforme pour minimiser les mélanges longitudinaux des particules solides et si l'épaisseur du lit fluidifié est relativement mince et la longueur de la chambre circulaire relativement grande, les particules solides alimentées d'un côté de la chambre circulaire vont se déplacer relativement uniformément vers l'autre extrémité. La chambre circulaire peut également être divisée en sections annulaires qui peuvent avoir des dimensions différentes et qui peuvent être traversés par des fluides de compositions et/ou à des températures et/ou à des débits et vitesses variables.

Ceci peut être particulièrement avantageux dans beaucoup d'applications. Par exemple pour les procédés de polymérisation, les particules catalytiques solides, en polymérisant, grossissent progressivement en passant au travers des sections successives et leur activité catalytique diminue progressivement. Cette évolution de l'activité et de la granulométrie des particules catalytiques peut être compensée en adaptant d'une section à l'autre, la vitesse d'injection, le débit, la température et la composition du fluide qui traverse le lit fluidifié et en augmentant progressivement ou par palier le diamètre de la paroi circulaire (2), afin d'augmenter l'épaisseur et donc le volume et donc le temps de résidence des particules catalytiques et du fluide qui traverse le lit fluidifié. Pour la gazéification de particules solides carbonées (bio masses, charbon, etc.), la taille des particules va en diminuant et l'activité liée au rapport masse/surface va en augmentant. Dans ce cas il est possible de diminuer progressivement le diamètre de la chambre circulaire en lui donnant une forme légèrement conique afin de réduire progressivement l'épaisseur du lit fluidifié.

Inversement, si cela est souhaitable, il est possible d'imposer un bon mélange longitudinal des particules solides à l'aide de déflecteurs ou de spires hélicoïdales fixés sur la paroi circulaire et/ou sur la cheminée centrale et/ou d'injecteurs pouvant injecter le fluide dans une direction ayant une composante longitudinale et/ou en augmentant le rapport entre l'épaisseur du lit fluidifié et la longueur de la chambre circulaire.

Il peut être souhaitable, par exemple si le temps de résidence des particules solides dans la chambre de réaction doit être relativement court, d'injecter les particules solides dans la chambre de réaction avec une vitesse relativement élevée, dont la composante longitudinale favorise le mélange des particules solides et la composante tangentielle à la paroi circulaire permet d'obtenir une plus grande vitesse de rotation du lit fluidifié.

Les particules solides peuvent être alimentées d'un côté de la chambre cylindrique fixe et évacuées de l'autre côté avec un temps de résidence moyen de quelques secondes à plusieurs heures suivant les besoins de l'application, par exemple en fonction de la vitesse de polymérisation, et la localisation des tubes d'évacuation des particules solides permet d'évacuer sélectivement les plus grosses (près de la paroi circulaire) et/ou les plus fines (plus près du tube rotatif d'évacuation du gaz) particules solides. L'alimentation et/ou l'évacuation des particules solides peuvent également se faire au travers de la paroi circulaire.

Une vis ou des spires hélicoïdales fixées sur la cheminée centrale rotative et pénétrant légèrement dans le lit fluidifié peuvent entraîner les particules les plus fines ou les plus légères dans une direction longitudinale, tandis que la pente du réacteur et/ou des injecteurs de fluide et/ou des déflecteurs ou spires hélicoïdales fixés sur la paroi circulaire peuvent entraîner les particules circulant le long de la paroi circulaire, c'est à dire les plus lourdes ou les plus grosses dans la direction opposée, ce qui permet une bonne classification des particules qui peuvent par exemple être injectées au milieu du réacteur.

Les particules solides peuvent être, en partie ou en totalité, recyclées dans la chambre circulaire, directement ou après traitement adéquat, par exemple une régénération, et plusieurs chambres circulaires peuvent être mises en série, les particules évacuées d'une chambre circulaire étant alimentées dans la chambre suivante.

De même les fluides peuvent être, en partie ou en totalité, recyclés après traitements adéquats, par exemple séchés, purifiés, refroidis ou réchauffés et si le dispositif d'alimentation et d'évacuation de ces fluides permet de les alimenter séparément dans des sections successives de la chambre circulaire et de les évacuer et de les traiter séparément, ces fluides peuvent être recyclés dans la même section ou dans une autre section en fonction des besoins de l'application.

Le très court temps de résidence du fluide dans le lit fluidifié, les variations rapides et successives de pressions permettant la respiration des particules poreuses, les différences de vitesses entre les particules solides et le fluide, ainsi que les très petites dimensions des particules solides permettent des vitesses de transferts de masse et de calories particulièrement élevées à des températures très stables. Il est particulièrement adapté aux réactions chimiques très rapides et très endothermiques ou exothermiques impliquant des micros particules ou des variations des dimensions ou du poids spécifique des particules solides, mais il permet aussi la classification, le séchage ou l'enrobage rapide de poudres fines qu'il est difficile de fluidifier par les procédés classiques.

Avec un lit fluidifié rotatif classique, supporté par un cylindre poreux rotatif solidaire du tube central d'évacuation du fluide, il est impossible d'obtenir une très grande force centrifuge près du tube central d'évacuation du fluide (par exemple 5.000 fois la pesanteur) sans avoir une force centrifuge encore plus élevée le long de la paroi poreuse supportant le lit de particules, ce qui est trop élevé pour fluidifier le lit avec un flux de gaz traversant le lit de particules solides à une vitesse suffisamment petite, par exemple de 0,4 m/s, pour ne pas entraîner les plus petites particules à l'intérieur de la cheminée centrale. En outre les forces s'exerçant sur le support, les vibrations provoquées par l'agitation des particules solides et la difficulté d'assurer une alimentation continue des particules solides, nécessairement par le tube central rotatif et de leur évacuation, nécessairement par la chambre d'alimentation du gaz sont des obstacles pour leur construction à l'échelle industrielle.

Il est également possible, lorsque le fluide principal est un gaz, de pulvériser de fines gouttelettes d'un liquide sur le lit fluidifié au travers du tube fixe (30.1) ou (30.2) ou au travers du tube rotatif (7) en passant le long de l'arbre de transmission (25) et par un ou plusieurs rayons (28) et éventuellement le long d'une ou plusieurs palettes (8). Ceci est particulièrement utile pour le refroidissement, l'imprégnation ou l'enrobage de particules solides ou lorsqu'un des fluides réactifs est de préférence un liquide.

Un liquide peut également être pulvérisé à l'intérieur du tube rotatif, et/ou des tubes fixes, par exemple pour refroidir brutalement le gaz qui vient d'être évacué. Ceci est particulièrement intéressant pour obtenir des produits de réactions intermédiaires nécessitant des temps de résidence du gaz très courts.

Selon un autre mode de réalisation particulier, illustré par les figures (6) et (7), la présente invention comprend aussi l'injection à l'intérieur d'une chambre annulaire rotative (44), contenant des particules solides et traversée par un ou plusieurs fluides, ce ou ces fluides sous la forme de nombreux jets ou de couches minces dans une direction opposée au sens de rotation de la chambre annulaire rotative, afin de faire tourner dans le sens contraire les particules solides poussées contre la paroi extérieure par la force centrifuge pour y réduire la force centrifuge et donc les fluidifier plus facilement. La vitesse d'injection du fluide est au moins égale à la moitié de la vitesse de rotation de la paroi rotative extérieure et de préférence à une vitesse supérieure à ladite vitesse de rotation afin de maintenir la rotation du lit fluidifié à une vitesse inférieure, mais du même ordre de grandeur et de préférence au moins la moitié de la vitesse de rotation de la chambre annulaire.

Selon ce mode de réalisation particulier de l'invention, le dispositif comprend une chambre fixe d'alimentation (20) à l'intérieur de laquelle se trouve une chambre annulaire (44) capable de tourner autour de son axe de symétrie pouvant contenir des particules solides et délimitée par des parois latérales (39), une paroi circulaire extérieure (2) munie d'ouvertures (3) d'injection de fluide régulièrement réparties le long de sa surface et une paroi circulaire intérieure (7), munie d'ouvertures d'évacuation (9);
- une chambre centrale d'évacuation (16) entourée par ladite paroi circulaire intérieure (7);
- un dispositif d'alimentation d'un ou plusieurs fluides (4) dans ladite chambre fixe d'alimentation (20);
- un dispositif d'évacuation du ou desdits fluides pouvant évacuer le ou lesdits fluides (380) de ladite chambre centrale d'évacuation (16),
caractérisé en ce que :
- les ouvertures d'injection de fluide (3) traversant ladite paroi circulaire extérieure (2) pour alimenter ladite chambre annulaire (44) avec le ou lesdits fluides sont orientées dans le sens inverse du sens de rotation des parois circulaires (2) et (7) et
- les ouvertures d'évacuation (9) traversant ladite paroi circulaire intérieure (7) pour évacuer le ou les fluides dans la chambre centrale d'évacuation (16) sont orientées dans le sens ou radialement au sens de rotation des parois circulaires (2) et (7).

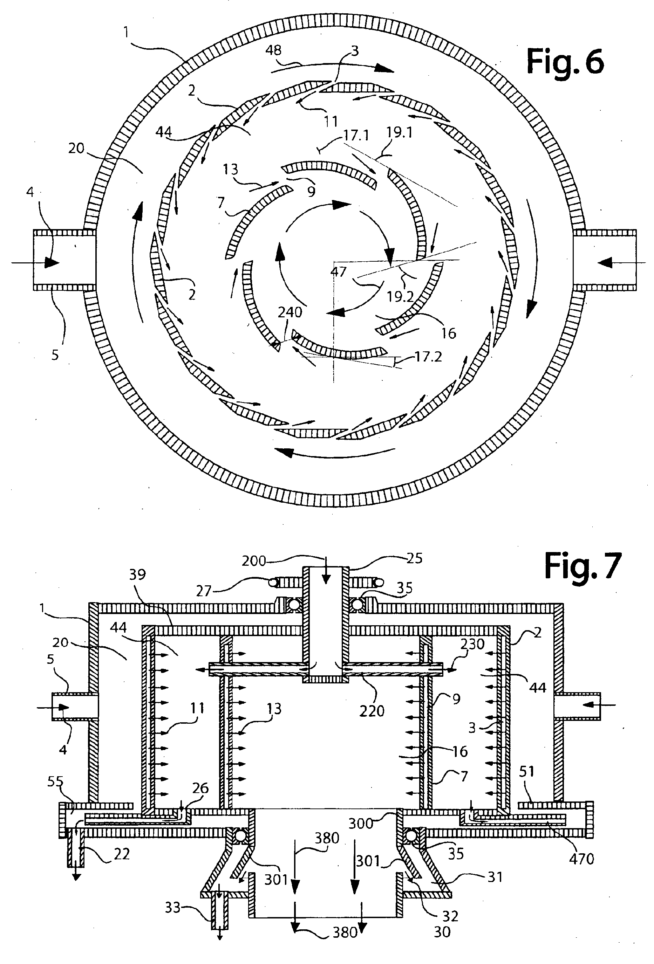

La **figure 6** montre un exemple de section transversale d'un réacteur rotatif selon un mode particulier de réalisation comprenant une enveloppe extérieure fixe (1) entourant une chambre fixe d'alimentation (20) alimentée en fluide (4) par les tubes (5). La chambre annulaire (44) délimitée par sa paroi circulaire extérieure (2) et sa paroi circulaire intérieure (7) tourne dans le sens des flèches (48) et (47) et elle est alimentée (11) en fluide provenant de la chambre d'alimentation (20) au travers des injecteurs ou ouvertures (3) d'injection de fluide dans la direction des flèches (11) opposée au sens de rotation (48) et (47). Le fluide est évacué (13) au travers de la paroi circulaire intérieure (7) par les ouvertures d'évacuation (9) de fluide dans la direction des flèches (13) orientée dans le sens de rotation (47) et il pénètre dans la chambre centrale d'évacuation ou cheminée centrale (16).

Dans cet exemple, la paroi circulaire extérieure (2) est symbolisée par les sections trapézoïdales de longues lattes (2), perpendiculaires au plan de la figure et séparées par de longues fentes longitudinales (3) d'injection de fluide et la paroi circulaire intérieure (7) est symbolisée par les sections de longues lattes courbes ou aubes (7), légèrement inclinées et séparées par les ouvertures longitudinales d'évacuation (9).

La chambre annulaire rotative (44) contient des particules solides non représentées. Celles-ci sont poussées contre la paroi circulaire (2) par la force centrifuge et vers la paroi circulaire intérieure (7) par la pression centripète du fluide qui traverse la chambre annulaire rotative (44). La direction d'injection du fluide (11) ralenti la rotation des particules solides proches de la paroi circulaire extérieure (2) en les faisant tourner à contresens et la direction d'évacuation (13) du fluide accélère la vitesse de rotation des particules solides entraînées par le ou les fluides à proximité des ouvertures d'évacuation (9).

Les particules solides dont la vitesse de rotation est ralentie par l'injection du fluide (11) le long de la paroi circulaire extérieure (2) sont aisément fluidifiées par ce fluide. Elles forment dès lors un lit fluidifié rotatif dont la densité à proximité de la paroi circulaire extérieure (2) diminue rapidement avec l'augmentation du débit du fluide.

Lorsque les particules solides entraînées par le fluide s'approchent de la paroi circulaire intérieure (7), leur vitesse de rotation est accélérée par l'évacuation (13) du fluide. L'augmentation de la force centrifuge empêche leur évacuation, si la vitesse de rotation de la chambre annulaire rotative est suffisamment rapide, ce qui augmente la densité du lit fluidifié dans les couches proches de la paroi circulaire intérieure (7), contrairement à ce qui se passe dans les lits fluidifiés à réacteur rotatif classique.

Et si les particules solides sont de tailles substantiellement différentes, on peut fluidifier les plus grosses particules à proximité de la paroi circulaire extérieure (2) sans perdre les plus fines qui se concentrent à proximité de la paroi circulaire intérieure (7). Dans les réacteurs rotatifs classiques l'augmentation du débit de fluide nécessaire à la fluidisation des grosses particules entraîne automatiquement les particules les plus fines vers la chambre d'évacuation ou bouchent le filtre si la paroi circulaire intérieure comprend un filtre.

Selon un mode de réalisation particulier, pour pouvoir fluidifier des particules solides relativement grosses, il faut que la force centrifuge s'exerçant sur ces particules solides le long de la paroi circulaire extérieure (2) ne soit pas trop élevée et donc que la vitesse de rotation inverse du lit fluidifié formé par ces particules solides soit suffisamment élevée, généralement au moins la moitié de la vitesse de rotation de la paroi circulaire extérieure. A cette fin et aussi pour éviter de fortes inhomogénéités et instabilités du lit fluidifié, il est souhaitable que la direction d'injection du fluide forme un angle inférieur à 30° avec ladite paroi (2), que la vitesse d'injection du fluide soit d'au moins la moitié et de préférence supérieure à la vitesse de rotation de ladite paroi (2) et que dans toute tranche annulaire d'une épaisseur égale à la distance moyenne entre la paroi circulaire intérieure (7) et extérieure (2) de la chambre annulaire rotative (44), la distance séparant deux injecteurs de fluide (3) soit inférieure au double de ladite distance.

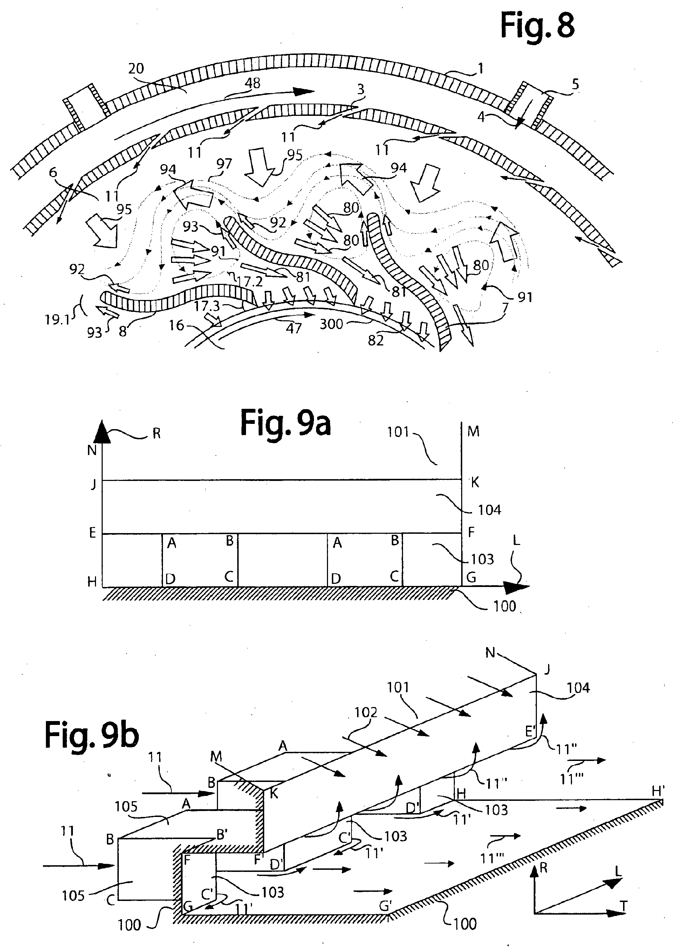

La forme de la paroi circulaire intérieure, représentée sur la figure 6 par des aubes (7), légèrement inclinée, peut aussi avoir une influence importante sur le comportement du lit fluidifié. Si l'angle entre la tangente à la surface d'une aube en un point donné et à la circonférence centrée sur l'axe de rotation et passant par le même point, appelé la pente ou l'inclinaison ou l'angle d'incidence (17.1) ou (17.2), est petit les particules solides vont glisser le long de la paroi. Par contre s'il est grand, comme dans cet exemple l'angle (19.1) ou (19.2), représentant la pente de l'extrémité extérieure ou intérieure des aubes (7), les particules solides sont repoussées ou attirées par lesdites aubes, généralement avec la formation d'un tourbillon de particules solides. Et si ces tourbillons ont une taille comparable à la largeur de la chambre annulaire rotative (44), comme sur la figure 8, ils peuvent générer des instabilités à l'intérieur du lit fluidifié.

Afin de réduire l'influence des tourbillons générés par les aubes (7), il est souhaitable que la largeur des ouvertures (9) ou la distance (240) qui sépare l'extrémité extérieure d'une aube (7) de l'aube suivante soit inférieure à la distance qui la sépare de la paroi circulaire extérieure (2).

La **figure 7** montre la section longitudinale du réacteur rotatif de la figure 6. Les flèches (11) et (13) montrent la composante radiale de la direction d'injection et d'évacuation du fluide au travers des parois circulaires (2) et (7) et les rectangles (3) et (9) symbolisent les ouvertures d'injection et d'évacuation du fluide, qui sont dans cet exemple de longes fentes longitudinales traversant toute la largeur de la chambre annulaire (44) qui est fermée par les parois ou côtés latéraux (39).

Les particules solides (200), sont alimentées au travers de l'arbre creux (25), pénétrant dans la chambre rotative d'évacuation (16) au travers de l'enveloppe fixe (1) et d'un côté latéral rotatif (39), par des tubes (220) traversant la paroi circulaire intérieure (7) et pénètrent (230) dans la chambre annulaire rotative (44) où elles sont poussées par la force centrifuge vers la paroi circulaire extérieure (2). Un dispositif adéquat, symbolisé par le roulement à billes (35), assure l'étanchéité entre l'arbre creux (25) et la paroi fixe (1). Une poulie (27), permet de relier l'arbre creux (25) à un moteur non représenté, permettant de faire tourner la chambre annulaire rotative (44).

La chambre rotative d'évacuation (16) est prolongée au-delà de l'enveloppe (1) par un tube rotatif (300) s'évasant (301). Sous l'effet de la force centrifuge, les particules solides entraînées par l'évacuation du fluide (13) se concentrent (32) le long de la paroi du tube rotatif (300) et elles sont évacuées au travers de la chambre de séparation (31), faisant office de cyclone, vers un dispositif de récupération par le tube (33). Le fluide (380), débarrassé des particules solides par la force centrifuge, est évacué par le tube fixe (30). Un dispositif adéquat, symbolisé par le roulement à bille (35), assure l'étanchéité entre le tube rotatif (300) et l'enveloppe fixe (1).

Les particules solides sont évacuées de la chambre annulaire rotative (44) par une ou plusieurs ouvertures (26) dans une paroi latérale (39), reliée à un tube rotatif (470), vers la zone d'évacuation (55) d'où elles sont évacuées par le tube (22). Une cloison (51) symbolise la séparation entre la chambre d'alimentation (20) de fluide et la zone d'évacuation (55) des particules solides. Selon un mode de réalisation particulier, la pression dans la chambre d'alimentation (20) est de préférence plus élevée pour empêcher les particules solides d'y pénétrer et la pression dans la zone d'évacuation (55) doit être suffisamment faible pour faire pénétrer les particules solides dans l'ouverture (26), mais la force centrifuge à l'intérieur des tubes (470) peut permettre d'augmenter cette pression afin d'être voisine de la pression dans la chambre d'alimentation (20) et donc de limiter les pertes de fluide au travers du dispositif de séparation vers la zone d'évacuation.

La quantité de particules solides à l'intérieur de la chambre annulaire rotative (44) peut être automatiquement régulée par l'éloignement des ouvertures (26) de la paroi circulaire extérieure (2). Elle peut être également influencée par la différence de pression entre la zone d'évacuation (55) et la pression dans la chambre annulaire (44) en face des ouvertures (26), ainsi que par la densité du lit fluidifié et donc par la vitesse de rotation de la chambre annulaire (44) et par le débit du fluide.

La position des ouvertures (26) permet aussi d'influencer la granulométrie des particules solides évacuées par ces ouvertures (26), les plus grosses particules ou les plus lourdes se concentrant à proximité de la paroi circulaire extérieure (2) et les plus fines ou les plus légères se concentrant à proximité de la paroi circulaire intérieure (7).

Les changements de direction de l'écoulement du fluide et des particules solides entraînent la formation de tourbillons qui favorisent le transfert de particules solides et de moment cinétique entre les différentes couches du lit fluidifié.

La **figure 8** illustre un mode de réalisation particulier schématisant l'influence sur la formation de tourbillons de la forme et du nombre des aubes (7) délimitant les ouvertures d'évacuation du fluide de la chambre annulaire (44), en montrant la section transversale de trois aubes (7) dont la forme en "S" permet d'avoir une forte inclinaison (19.1) et (17.3), de plus de 45°, à ses extrémités et une faible inclinaison (17.2), de moins de 30°, dans sa partie médiane. Ces aubes font face aux injecteurs de fluide représentés par les fentes (3).

Dans cet exemple, le fluide est aspiré par la dépression de la chambre rotative d'évacuation (16). Il pénètre d'abord dans l'espace large entre les aubes (7), à petite vitesse, dans la direction des flèches (80), dont la composante tangentielle est importante en raison de la faible inclinaison (17.2) de la partie médiane des aubes (7). Il est ensuite accéléré au fur et à mesure du rétrécissement de l'espace entre les aubes, pour atteindre une vitesse maximum (81) et puis il ralentit tout en prenant une direction de plus en plus radiale (82) en raison de l'augmentation de l'inclinaison (17.3) de la partie intérieure des aubes (7), avant de pénétrer dans la chambre rotative d'évacuation (16) et de se diriger longitudinalement, c'est-à-dire perpendiculairement au plan de la figure, vers le tube rotatif extérieur, schématisé par les portions de cercles (300).

Les arrêtes vives le long des bords intérieurs des aubes génèrent de la micro turbulence et donc une perte de charge qui permet de mieux répartir l'évacuation du fluide le long des ouvertures d'évacuation.

Les particules solides qui suivent les lignes ondulantes de flux (97) du lit fluidifié sont poussées par le fluide (80) vers les ouvertures d'évacuation (9).

La partie médiane des aubes, dont l'inclinaison (17.2) est ici inférieure à 30°, oriente le fluide (80) et donc aussi les particules solides dans une direction dont la composante tangentielle est importante et dirigée dans le sens de rotation de la chambre annulaire. Les particules solides, entraînées par le fluide, acquièrent donc une vitesse tangentielle importante et, si la vitesse de rotation de la chambre annulaire est suffisante pour générer une force centrifuge supérieure à la pression centripète du fluide sur les particules solides, la force centrifuge les repousse le long de la surface intérieure de la partie extérieure des aubes dans la direction (93), suivant l'inclinaison (19.1), qui est ici supérieure à 60°.

De la même manière, les particules solides qui s'approchent de la surface extérieure de la partie extérieure des aubes, où l'inclinaison (17.1) est également forte et où la pression centripète du fluide est relativement faible, sont accélérées par lesdites aubes et la force centrifuge les repousse dans la direction (92).

Les flux de particules solides (92) et (93) exercent une pression dynamique (94) qui fait onduler le lit fluidifié et initie des tourbillons de particules solides (91) entre la partie médiane d'une aube et la partie extérieure de l'aube qui la précède. Ces tourbillons ramènent les particules solides, qui ont failli être entraînées dans la chambre centrale d'évacuation (16), à l'intérieur du lit fluidifié. Toutefois la pression exercée par les flux de particules solides (92) et (93) sur les injecteurs de fluide (3) situés en face de ces flux va diminuer la quantité et la vitesse du fluide injecté par ces injecteurs au profit des autres injecteurs de fluide (3), générant une pression dynamique (95) qui repousse les particules solides vers la chambre centrale d'évacuation (16).

Ces pressions dynamiques de sens contraires peuvent initier des tourbillons, non représentés sur la figure 8, tournant dans le sens opposé aux tourbillons (91) entre la partie extérieure des aubes (7) et les injecteurs de fluide (3). Et si la distance entre les extrémités extérieures des aubes (7) est importante par rapport à la distance qui les sépare de la paroi circulaire extérieure (2), ces tourbillons peuvent fragmenter le lit fluidifié.

Pour réduire ce risque, on peut réduire la pente (17.1) de la surface extérieure de la partie extérieure des aubes (7) et donc la pression des particules solides qui glissent le long de la surface extérieure des aubes (7), tout en gardant une forte pente sur sa surface intérieure, comme représenté sur la figure 6, afin de pouvoir repousser les particules solides vers le lit fluidifié le long de cette surface, en ne produisant que de petits tourbillons.

Cette forme permet de réduire les forces de cisaillement dans le lit fluidifié et d'obtenir une couche de fines particules solides glissant le long de la paroi circulaire intérieure (7) et de grosses particules le long de la paroi circulaire extérieure (2). Toutefois, suivant les applications, il peut être souhaitable d'obtenir une forte agitation pour améliorer les transferts de masse et empêcher la formation d'agglomérats. Dans ce cas, le profil en "S" est favorable et pour empêcher la formation de grands tourbillons générant des instabilités. Selon un mode de réalisation particulier, il faut que le nombre d'aubes soit suffisant pour que la distance entre leurs extrémités extérieures ne soit pas trop grande par rapport à la distance qui les sépare de la paroi circulaire extérieure (2) et de préférence qu'elle soit inférieure au double de cette distance. Il faut également que les flux de gaz (11) qui sont injectés par les ouvertures d'injection (3) ne soient pas trop sensibles aux variations de pression le long de la surface intérieure de la paroi circulaire extérieure (2). Ceci peut être assuré à l'aide d'étranglements semblables à ceux qui sont décrits dans la figure 9.

La **figure 9a** est une vue frontale schématique d'un flux de gaz pénétrant dans la chambre annulaire rotative, selon un mode particulier de réalisation, par les ouvertures de sections (ABCD), suivant une direction (T) perpendiculaire au plan de la figure, approximativement tangentielle à la paroi circulaire extérieure, dont la section est symbolisée par les hachures (100) et la surface intérieure (JKMN), le long de laquelle glissent les particules solides, est symbolisée par les hachures en traits fins (101). Les sections (EADH), (BADC) et (BFGC) hachurées en traits fins (103) sont obturées sur une courte distance et la section (EFKJ), hachurée en traits fins (104) est obturée sur une distance un peu plus longue, permettant aux flux de fluide de subir une première expansion brutale dans une direction longitudinale suivie d'une seconde expansion brutale dans une direction radiale, les deux expansions successives et brutales étant accompagnées de la formation de micro turbulence, avant de pénétrer dans la chambre annulaire et d'y rencontrer les particules solides glissant le long de la surface intérieure de la paroi circulaire extérieure (101) ou (JKMN).

La **figure 9b** est une vue axonométrique schématique de l'exemple de la figure 9a, qui montre ce flux de fluide (11), qui est guidé par la paroi circulaire extérieure dont le pourtour de la section est seulement esquissé par les hachures (100) afin de mieux visualiser les canaux d'écoulement du gaz dont certaines surfaces ont été hachurées en traits fins (105). (101) représente la surface intérieure de la paroi extérieure.

Dans cet exemple, le gaz (11) pénètre à l'intérieur de deux conduits de section ABCD qui s'élargissent brutalement dans une direction longitudinale (L) et se rejoignent. Le fluide (11') est expansé longitudinalement, le long des surfaces (103), avec la formation de petits tourbillons dans des plans longitudinaux, en raison du changement brutal de direction. Il suit la nouvelle section EFGH sur une petite distance (FF') et il (11") est expansé à nouveau, le long de la surface (E'F'KJ) hachurée en traits fins (104), dans une direction (R), approximativement radiale, avec la formation de petits tourbillons dans des plans transversaux, avant de rencontrer les particules solides (102) qui glissent le long de la surface intérieure "JKMN" de la paroi circulaire extérieure à l'intérieur de la chambre annulaire rotative.

Suite à cette double expansion, la vitesse moyenne du fluide (11"') est réduite proportionnellement au rapport des sections et une bonne partie de son énergie cinétique est convertie en micro turbulence qui est transférée aux particules solides, ce qui améliore leur fluidisation dans toutes les directions et donc l'homogénéité du lit fluidifié. En outre, cette énergie perdue se traduit par une diminution de la pression du fluide qui est approximativement proportionnelle au carré du débit du fluide. Elle réduit donc les différences locales de débit dues aux variations de pression le long de la paroi circulaire extérieure, générées par la pression dynamique des flux (92) et (93) des particules solides repoussées par les aubes (7) de la figure 8.

Le rapport des sections nécessaire à l'obtention d'une répartition suffisamment homogène de l'injection du fluide le long de la paroi circulaire extérieure dépend de l'amplitude des variations de pression à l'intérieur du lit fluidifié. Les simulations et les expériences montrent qu'il est souhaitable que la perte de pression au travers des injecteurs de fluide soit du même ordre de grandeur, mais des résultats acceptables sont déjà visibles pour des chutes de pression du dixième et de préférence du cinquième de la pression centrifuge des particules solides sur la paroi circulaire extérieure en raison de l'effet stabilisateur apporté par la micro turbulence et le lit fluidifié rotatif une fois qu'il est constitué.

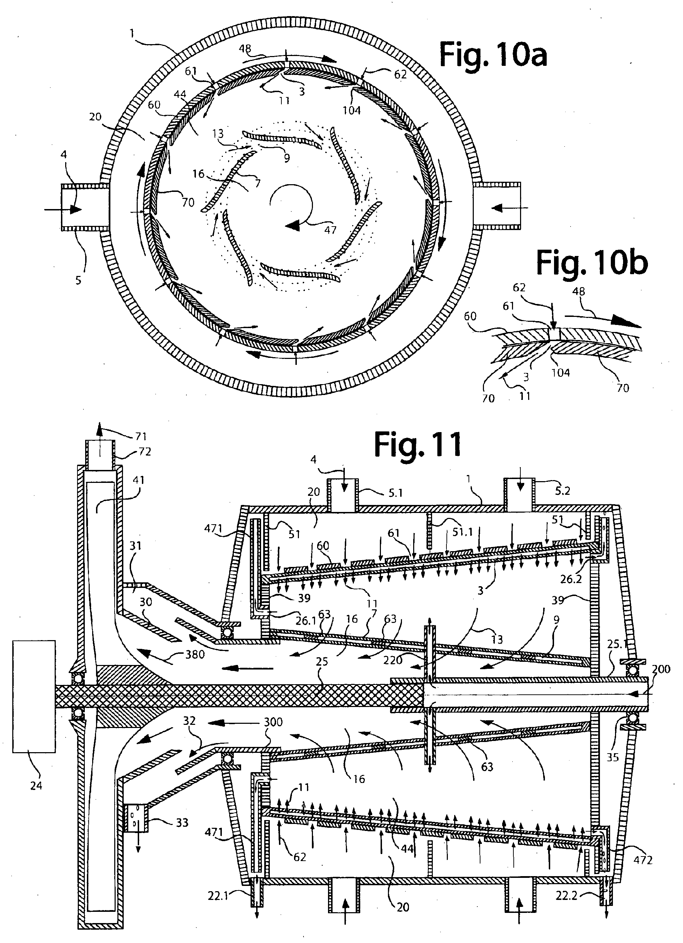

La **figure 10a** montre la section transversale d'un exemple de réalisation particulier de parois circulaires permettant cette double expansion brutale du fluide (11) et dont la paroi circulaire intérieure est formée d'aubes (7) dont la courbure varie, épousant vaguement la forme d'un S dont la partie médiane a une inclinaison plus faible que l'inclinaison des deux extrémités.

Les particules solides glissant le long de l'extrémité extérieure de ces aubes (7) sont renvoyées par la force centrifuge vers la surface intérieure (70) de la paroi circulaire extérieure; celles qui glissent le long de la partie médiane sont accélérée par le fluide qui se dirige (13) vers l'ouverture (9), augmentant la force centrifuge qui les empêche de pénétrer dans cette ouverture (9) et les dirige vers la partie intérieure de l'extrémité extérieure de l'aube précédente, le long de laquelle elles glissent avant d'être envoyées vers la surface intérieure (70) de la paroi circulaire extérieure. Le fluide séparé des particules solides par la force centrifuge, pénètre dans l'ouverture (9) en prenant progressivement une direction radiale et en perdant de la vitesse.

Cette forme en S favorise la formation de tourbillons de particules solides qui, en transférant aux couches superficielles du lit fluidifié une quantité de mouvement dirigée dans le sens de rotation (47) et (48) de la chambre annulaire (44), ralenti la rotation inverse de ces couches superficielles du lit fluidifié et donc y augmente la force centrifuge et donc la densité de ces couches.

La paroi circulaire extérieure est formée de plaques courbes (70) séparées par des fentes (3) et s'appuyant sur une paroi cylindrique (60) comprenant de nombreuses ouvertures (61) percées en face des fentes (3). Le fluide (62) pénètre radialement dans les ouvertures (61) et il est dévié dans les fentes (3) dans la direction (11) tout en subissant une expansion dans la direction longitudinale, ce qui le ralentit et génère de la turbulence.

La **figure 10b** montre un agrandissement d'une de ces fentes (3) faisant face à une ouverture (61), afin de visualiser la sortie de cette fente (3) dont l'arête (104) est tronquée, ce qui génère une expansion radiale du fluide (11) avec un deuxième ralentissement du fluide et génération de turbulence.

Ces ralentissements du fluide avec génération de turbulence entraînent une dépense d'énergie et donc une perte de pression qui améliore l'homogénéité de la distribution du fluide et la micro turbulence améliore la fluidisation multidirectionnelle du lit fluidifié afin de réduire les inhomogénéités et les instabilités du lit fluidifié qui sont générées par l'injection de jets ou couches de fluide le long d'une paroi circulaire ou par l'influence des tourbillons de particules solides générés par la paroi circulaire intérieure (7) qui force le fluide et les particules solides à tourner dans le sens contraire de l'injection du fluide (11).

La **figure 11** montre une variante de la section longitudinale d'un réacteur semblable à celui de la figure 10 selon un mode de réalisation particulier, où les parois circulaires extérieures formées par les anneaux (60) et plaques (70) et intérieures (7) ont la forme de troncs de cônes. La paroi cylindrique (60) est remplacée par une succession d'anneau (60) espacés de manière à laisser des ouvertures (61) qui sont des ouvertures annulaires, par où le fluide (62) doit passer avant de pénétrer et de se détendre dans les fentes longitudinales, perpendiculaires à ces ouvertures annulaires. La chambre d'alimentation (20) est divisée par des cloisons annulaires (51) et (51.1) en deux ou plusieurs tronçons qui sont alimentés séparément en fluide par les tubes (5.1) et (5.2).

Le fluide est ensuite évacué par les ouvertures (9) de la paroi circulaire intérieure (7). Ces ouvertures (9) peuvent être localement obstruées, par exemple par des anneaux (63), afin de lui imposer des restrictions et donc une chute de pression supplémentaire qui contribue à mieux répartir les flux de ce fluide le long de ces ouvertures d'évacuation (9).

Les particules solides (200) sont alimentées au milieu de la chambre annulaire rotative (16) par les tubes (220) au travers de l'axe de transmission creux (25.1) qui est prolongé par un arbre de transmission plein (25). Elles sont évacuées par des ouvertures, (26.1) et (26.2), dans les deux parois latérales (39). Les ouvertures (26.1) d'un côté sont proches de la paroi circulaire intérieure (7) afin de récupérer par le tube (22.1) les particules solides les plus fines et les ouvertures (26.2) de l'autre côté sont proches de la paroi circulaire extérieure afin de récupérer par le tube (26.2) les plus grosses particules. Des électrovannes peuvent être aménagées dans les tubes (471) et (472) afin de contrôler l'évacuation des particules solides.

Le tube fixe (30) est évasé et conduit le fluide (380), débarrassé de ses particules solides par la chambre de séparation ou le cyclone (31), vers un dispositif d'évacuation du fluide avec éventuellement production d'énergie, symbolisé dans cette illustration par un compresseur centrifuge ou une turbine symbolisée par les pales (41) et fixée sur l'arbre de transmission auquel est raccordé un moteur ou générateur (24) suivant que le fluide est aspiré par le compresseur centrifuge ou qu'il actionne la turbine, en fonction des applications. Le fluide (71) est évacué par le tube (72).

La forme conique de la chambre annulaire rotative (44) permet de favoriser la concentration des particules solides les plus grosses dans sa partie large et des particules les plus fines dans sa partie étroite. Les débits et caractéristiques des fluides injectés par les tubes (5.1) et (5.2) peuvent être adaptés aux caractéristiques du lit fluidifié dans les différentes zones.

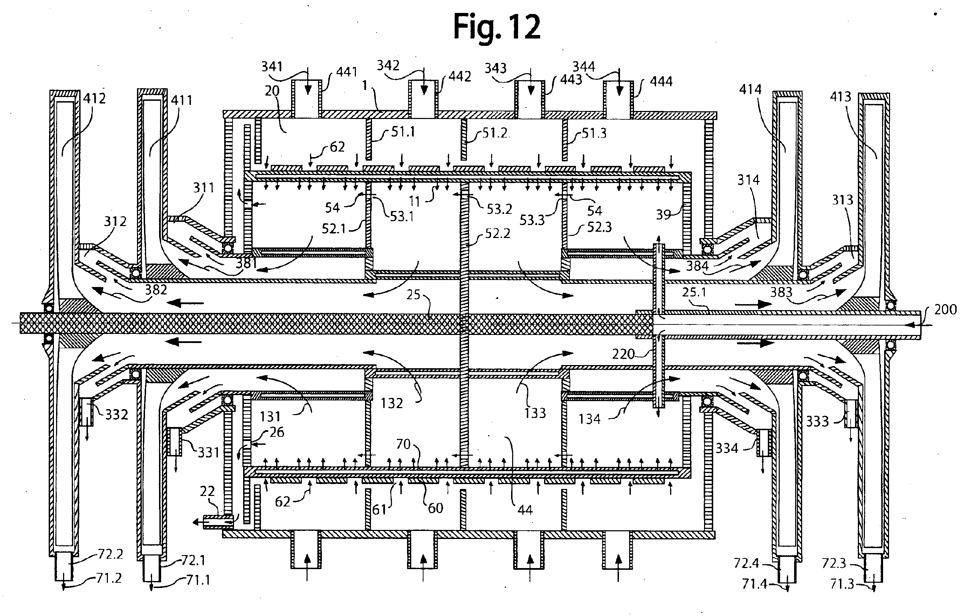

La **figure 12** montre la section longitudinale d'un réacteur rotatif du type de la figure 11 selon un mode de réalisation particulier, avec 4 zones d'alimentations séparées par des cloisons annulaires fixes, de (51.1) à (51.3) et 4 zones annulaires rotatives séparées par les cloisons rotatives, de (52.1) à (52.3), munies d'ouvertures de (53.1) à (53.4) permettant le passage (54) des particules solides d'une zone annulaire rotative à l'autre.

Les fluides de (341) à (344) sont alimentés séparément par les tubes (441) à (444) et traversent chacun une des 4 zones. Ils, de (131) à (134) sont évacués séparément au travers des chambres de séparation, de (311) à (314) et des dispositifs d'évacuation symbolisés par des turbines, de (411) à (414) par les tubes de (72.1) à (72.4).

Les particules solides (200) sont alimentées d'un côté au travers de l'axe de transmission creux (25.1) par les tubes rotatifs (220) et elles sont évacuées de l'autre côté au travers des ouvertures (26) par le tube (22). Les particules solides les plus fines qui sont entraînées par les fluides, de (131) à (134), sont récupérées dans les chambres de séparation ou cyclones, de (311) à (314) par les tubes de (331) à (334). Les fluides (381) à (384) débarrassés de leurs particules solides sont évacués vers des dispositifs d'évacuation des fluides symbolisés dans cette illustration par des compresseurs centrifuges ou des turbines symbolisées par les pales de (411) à (414). Les fluides de (71.1) à (71.4) sont évacués par les tubes de (72.1 à (72.4).

Un des avantages de l'injection tangentielle de jets ou couches minces de fluide faisant glisser le lit fluidifié dans le sens contraire du mouvement de rotation de la chambre annulaire est de l'exposer successivement à une forte expansion en aval des ouvertures d'injection de fluide suivi d'une contraction en amont de l'injecteur suivant, ce qui est favorable aux transferts de masse et de chaleur entre le fluide et les particules solides, surtout lorsqu'elles sont poreuses, et permet de luter contre les forces de cohésion. Ce dispositif est donc particulièrement bien adapté aux procédés impliquant des particules solides poreuses ou ayant tendance à s'agglomérer et/ou nécessitant d'importants transferts de masse ou de chaleur, par exemple pour des réactions très exothermiques ou endothermiques.

Les dispositifs selon la présente invention sont particulièrement adapté aux procédés de polymérisation catalytique, en ce compris des oléfines, de séchage, d'extraction de composés volatils, d'imprégnation, d'enrobage, de gazéification, de combustion partielle ou totale, de classification et d'autres traitements de particules solides en suspension dans un lit fluidifié rotatif, de transformation catalytique de fluides.

Ils sont particulièrement adaptés à la polymérisation catalytique d'oléfines en phase gazeuse, dans laquelle au moins une partie des oléfines est du 1-octène.

Les dispositifs selon l'invention sont aussi applicables à la déshydrogénation catalytique de l'éthylbenzène pour le transformer en styrène.

Ils sont également adaptés aux procédés qui comprennent des étapes qui consistent à injecter un liquide sur lesdites particules solides et à faire réagir chimiquement ou physiquement (par exemple : séchage, imprégnation) ledit liquide imprégnant ou entourant lesdites particules avec le ou lesdits fluides gazeux traversant ledit lit fluidifié rotatif.

Enfin, ils trouvent des applications dans le domaine agricole, pour le traitement, en particulier le séchage, des grains, de la poudre, et des autres fragments d'origine agricole. La présente invention concerne donc, un procédé choisi parmi les procédés de polymérisation catalytique en ce compris des oléfines, de séchage, d'extraction de composés volatils, d'imprégnation, d'enrobage, de combustion, de gazéification, de classification et d'autres traitements de particules solides en suspension dans un lit fluidifié rotatif, de transformation catalytique de fluides caractérisé en ce qu'il utilise le dispositif selon la présente invention.
Selon un mode de réalisation particulier, le procédé consiste en la polymérisation catalytique d'oléfines en phase gazeuse, caractérisé en ce qu'au moins une partie des oléfines est du 1-octène. Selon un mode de réalisation particulier, le procédé comprend les étapes qui consistent à injecter un liquide sur lesdites particules solides et à faire réagir chimiquement ou physiquement ledit liquide imprégnant ou entourant lesdites particules avec le ou lesdits fluides gazeux traversant ledit lit fluidifié rotatif.
Selon un mode de réalisation particulier, ledit fluide ou mélange de fluides contient de l'éthylbenzène et que ladite transformation catalytique implique sa déshydrogénation pour le transformer en styrène.
Selon un mode de réalisation particulier, lesdites particules solides sont d'origine agricole et choisies parmi les grains, la poudre et les autres fragments.

### Exemples d'applications :

### Fluidisation de micro particules

Des simulations ont montré qu'on peut obtenir un lit fluidifié dense avec des particules de 15 micromètres, du groupe C de la classification de Geldart, grâce à une force centrifuge très élevée, de l'ordre de 50 fois la pesanteur, en le faisant traverser par un fluide de densité comparable à l'air à une vitesse radiale de l'ordre de 0,4 m/s, et que des particules de quelques micromètres peuvent être fluidifiées et former un lit fluidifié dense avec une force centrifuge 10 fois plus élevée.

Dans cet exemple, la chambre de réaction cylindrique a 40 cm de diamètre et 1 m de long. Elle comprend un tube rotatif central d'évacuation de fluide, de 28 cm de diamètre, muni de palettes, tournant à 6.000 tours par minute, permettant d'entraîner le fluide autour du tube rotatif à une vitesse d'environ 85 m/s, générant une force centrifuge de plus de 5.000 fois la pesanteur, suffisante pour empêcher l'entraînement des particules solides, d'un ordre de grandeur d'un micromètre, dans les ouvertures d'évacuation du tube rotatif.

Des injecteurs de gaz, répartis autour de la paroi cylindrique, permettent l'injection de gaz en couches successives dans des directions transversales formant un angle de moins de 45° avec la paroi circulaire. Avec une surface d'injection totale de 1 dm², et une vitesse d'injection du gaz de 100 m/s, ce qui donne un débit de gaz de 1 m³/s, la vitesse radiale moyenne est d'environ 0,4 m/s. Les particules solides sont entraînées dans un mouvement de rotation rapide pouvant générer une force centrifuge de plus de 500 fois la pesanteur, suffisante pour désolidariser les particules solides et pour obtenir un lit fluidifié dense de quelques cm d'épaisseur avec des particules solides de 5 à 10 micromètres.

Si la paroi circulaire supportant le lit fluidifié tourne à 600 tours par minute, ce qui lui donne une vitesse tangentielle d'environ 12m/s, la force centrifuge générée par cette vitesse de rotation le long de cette paroi est de 64 fois la pesanteur. Celle-ci peut être augmentée en injectant au moins une partie du gaz dans une direction tangentielle.

Si la paroi circulaire supportant le lit fluidifié est fixe, la vitesse de rotation des particules solides le long de cette paroi sera plus faible, ce qui permet de fluidifier le long de cette paroi des particules de plus grande taille. Cette force centrifuge dépend du transfert de moment cinétique entre ces particules et les particules proches du tube rotatif central ainsi que de la vitesse d'injection du fluide et des autres caractéristiques de la chambre circulaire. Ceci permet donc de choisir l'importance de la force centrifuge le long de la paroi circulaire en fonction de la granulométrie des particules solides qui doivent être fluidifiées.

Ce dispositif permet donc, dans un réacteur de 100 litres environ, de faire traverser par 1.000 litres de gaz par seconde un lit fluidifié rotatif dense d'une cinquantaine de litres de particules solides de quelques microns et le gradient de force centrifuge entre le lit fluidifié et le tube rotatif central permet de fluidifier un mélange de particules solides comprenant des fines de moins d'un micron. Ceci est particulièrement intéressant lorsque la taille des particules solides varie, par exemple en raison de leur combustion partielle pour la fabrication de gaz de synthèse, ou de leur polymérisation ou enrobage progressif.

### Combustion ou gazéification de biomasses ou autres particules carbonées

Un réacteur du type de la figure 2 avec une chambre annulaire (44) conique et une chambre d'alimentation (20) de fluide divisée en sections annulaires alimentées séparément en fluides par les tubes (5.1) et (5.2) comme dans la figure 11 et comprenant des aubes (7) creusès et munies d'injecteurs de fluide (12) comme dans la figure 4 est bien adapté à la combustion ou la gazéification de petites particules de tailles variables comme la poussière de charbon ou de particules légères pouvant brûler rapidement, comme les biomasses broyées.

Les particules solides alimentées par les tubes (21), dont la position peut être adaptée aux types de particules solides injectées, se répartissent à l'intérieure de la chambre annulaire rotative (44) ou chambre de combustion, les plus grosses allant de préférence vers la partie large du cône, ce qui permet un plus long temps de résidence. Le débit de gaz plus élevé et éventuellement la température et composition du gaz injecté dans cette zone par les tubes (5.2) peuvent être adapté aux caractéristiques du lit fluidifié dans cette zone.

Les particules de tailles moyennes s'accumulent de préférence dans la partie étroite de la chambre de combustion, où elles poursuivent leur combustion. La force centrifuge étant plus élevée dans cette zone et l'épaisseur du lit fluidifié y étant plus fine, le débit de gaz des tubes (5.1) être adapté aux caractéristiques du lit fluidifié dans cette zone.

Les particules les plus fines s'accumulent le long des aubes (7) et sont progressivement entraînées par le fluide (13) à l'intérieur de la chambre rotative d'évacuation (16) où elles sont accélérées par l'injection de fluide (12) et achèvent leur combustion ou leur gazéification avant d'être évacuées par le tube (300).

Les cendres fines qui ont été entraînées dans le tube (300) peuvent être récupérées dans le cyclone (31) par le tube (33). Les cendres fines qui s'accumulent dans la chambre annulaire (44) peuvent être évacuées par intermittence par des tubes (22). Les grosses cendres peuvent être récupérées occasionnellement par un tube (22) placé à l'extrémité la plus large de la paroi circulaire (2) où elles ont tendance à s'accumuler, mais, d'une manière générale, la forte turbulence empêche normalement la formation d'agglomérats et favorise leur attrition, ce qui en réduit substantiellement le volume.

Le débit de gaz pouvant être extrêmement élevé et son temps de résidence très court, on peut utiliser un gaz très actif, par exemple un mélange d'oxygène pur et de vapeur d'eau pour la fabrication de gaz de synthèse, ou utiliser de l'air comprimé dont la détente au travers de la turbine (70) peut entraîner un alternateur (75) pour la production directe d'électricité.

La puissance calorifique de ce dispositif dépend essentiellement de la vitesse de combustion. Plus les particules solides alimentées sont fines et la pression du gaz est élevée, plus rapide sera la combustion, la vitesse de rotation de la chambre de combustion pouvant être adaptée aux caractéristiques des particules solides alimentées.

### Polymérisation de fines particules catalytiques

Un dispositif du type de la figure 2 avec une chambre annulaire (44) conique, comme dans la figure 11, est parfaitement adapté à la polymérisation de fines particules catalytiques très actives qui sont alimentées dans la partie étroite de la chambre annulaire conique et migrent vers la partie large au fur et à mesure qu'elles gagnent du poids et perdent généralement un peu de leur activité. Elles sont ensuite collectées à l'autre extrémité. Elles peuvent éventuellement être recyclées.

Le fluide, qui sert de monomère, peut être un liquide, à condition qu'il ait un poids spécifique inférieur à celui des particules solides, mais il est de préférence à l'état gazeux. Il peut être recyclé par le compresseur (41).

Il est souvent souhaitable de mettre les particules catalytiques en contacts successifs avec des fluides de composition et/ou à des températures différentes. Dans ce cas, le schéma de la figure 5, qui peut adopter la forme conique pour tenir compte de l'évolution de la taille et de l'activité des particules catalytiques, convient parfaitement. Les particules catalytiques sont alimentées d'un côté et collectées de l'autre après être passées au travers des 4 zones consécutives qui sont traversées par les fluides qui peuvent être collectés et recyclés séparément, par exemple par des compresseurs placés sur le même axe de rotation, de (41.a) à (41.d).

Les débits de gaz pouvant être extrêmement élevés, ce procédé est particulièrement adapté à l'utilisation de particules catalytiques très fines et très actives et nécessitant de travailler à basse pression.

### Séchage de mélange de particules solides

Ces schémas conviennent au séchage de mélanges de particules solides qui sont alimentées d'un côté du réacteur rotatif et récupérées de l'autre côté, les fines pouvant être séparées des grosses particules, le gaz de séchage pouvant être recyclé, par exemple au travers de compresseurs placés sur le même axe de rotation, le gaz le moins chaud et le plus sec traversant la zone proche de la sortie des particules solides séchées et les gaz les plus chargés d'humidité et généralement les plus chauds traversant la zone proche de l'entrée des particules solides à sécher.

Ce procédé permet également l'extraction de solvants ou autres matières indésirables imprégnant les particules solides à traiter.

### Imprégnation de particules solides

Ce même procédé permet l'imprégnation de particules solides, le produit d'imprégnation pouvant être contenu dans le fluide qui traverse le lit fluidifié ou directement pulvérisé dans le lit fluidifié à l'aide de pulvérisateurs alimentés par des tubes traversant la paroi circulaire intérieure (7), de la même manière que les tubes (220) représentés sur les figures 7, 11 et 12, servant à alimenter les particules solides.

### Modification catalytique d'un fluide

Ce procédé est particulièrement adapté à la modification catalytique d'un fluide nécessitant des temps de séjours très courts, avec des poudres catalytiques très actives, nécessitant des régénérations fréquentes du catalyseur.

Si le fluide ne doit traverser le lit fluidifié qu'une seule fois, le schéma de la figure 1 ou 7 convient. S'il faut le recycler plusieurs fois, par exemple pour compenser son refroidissement du à des réactions très endothermiques, comme le craquage d'oléfines d'essences lourdes ou l'oxydoréduction d'éthylbenzène en styrène, le schéma avec plusieurs zones annulaires de la figure 5 ou 12 est préférable.

### Polymérisation et copolymérisation de l'éthylène avec de fines particules catalytiques très actives

Un réacteur du type de la figure 5 ou 12, contenant plusieurs zones annulaires, permet de bien contrôler la polymérisation ou la copolymérisation de l'éthylène, dont la réaction est très exothermique et très rapide avec les nouveaux catalyseurs très actifs.

A titre purement indicatif, pour illustrer les ordres de grandeurs permettant de montrer les avantages de ce dernier type de réacteur, on peut considérer un réacteur cylindrique industriel dont le diamètre extérieur et intérieur de la chambre annulaire rotative est de respectivement 3 et 1,8 m sur 5m de long ou de haut, si l'axe de symétrie est vertical, et donc son volume est d'environ 22 m³ et sa surface extérieure est d'environ 47 m².

Si cette chambre annulaire tourne à 300 tours par minute, la vitesse tangentielle des parois est de respectivement 47 et 28 m/s environ, produisant une force centrifuge de respectivement 150 et 90 fois la pesanteur. Cette dernière valeur peut être augmentée si le profil des ouvertures de sortie permet de faire tourner les particules solides proches de la paroi intérieure dans le sens de rotation.

Si cette chambre est traversée par 120 m³/s d'éthylène à 4 bars, qui est une pression suffisamment basse pour permettre d'être accompagné de comonomère comprenant de l'octène à l'état gazeux, soit un peu plus de 2.000 tonnes par heure, la vitesse radiale du fluide de 2,5m/s correspond à une vitesse interstitielle d'environ 5m/s. Elle est normalement insuffisante pour fluidifier des particules solides de plus de 100 microns soumises à une force centrifuge de 150 fois la pesanteur. Si le débit de gaz est augmenté, il risque d'entraîner dans la cheminée centrale d'évacuation du gaz les plus petites particules solides. Par contre si le débit n'est pas augmenté, mais si son injection à contre sens permet de faire tourner les particules solides dans le sens contraire de la vitesse de rotation à une vitesse moyenne d'environ 20 m/s, soit un peu plus de 2 tours par seconde, la force centrifuge diminue suffisamment pour pouvoir fluidifier les grosses particules solides.

Il est dès lors possible de maintenir à l'intérieure de la chambre annulaire des particules d'environ 30 microns tout en fluidifiant le long de la paroi extérieure les particules d'environ 300 microns. (Il faut remarquer que des écarts plus élevés ou des débits plus élevés peuvent être obtenus en augmentant la vitesse de rotation et ces valeurs sont purement indicatives, car le comportement réel des particules solides doit tenir compte de leur morphologie).

Avec des particules solides approximativement sphériques, il est normalement possible d'obtenir à l'intérieur de la chambre annulaire un lit fluidifié stable d'une concentration moyenne de 25%, soit environ 5 tonnes de polyéthylène correspondant à un lit fluidifié dense, d'une concentration moyenne de 45% sur une épaisseur d'environ 30 cm. La chute de pression du fluide au travers du lit fluidifié dans ces conditions est d'environ 1 bar, auquel il faut ajouter la chute de pression au travers des injecteurs de fluide, des ouvertures de sortie de la paroi annulaire intérieure et de l'ensemble du circuit de récupération, refroidissement et recyclage du fluide, qui est du même ordre de grandeur.

La chambre annulaire décrite sur la figure 12 ayant 4 zones annulaires successives, il faut 4 compresseurs permettant de recomprimer à 4 bars le fluide évacué pour le recycler. Pour pouvoir régler la vitesse de rotation de la chambre annulaire indépendamment de la vitesse de rotation des compresseurs, il est préférable d'installer ces compresseurs à côté du réacteur au lieu d'être sur le même axe de rotation.

Chaque circuit de recyclage du fluide étant indépendant, il est possible d'alimenter chaque zone à des températures et éventuellement des compositions différentes.

Le transfert (54) des particules solides d'une zone à l'autre par les ouvertures (53.1) à (53.4) est déterminé par les différences de pression d'une zone à l'autre. Celle-ci est influencée par la quantité de particules solides à l'intérieur de chaque zone et par la quantité de monomère et comonomère frais qui est ajoutée ou de fluide recyclé qui est prélevé dans chaque circuit de recyclage. Il est donc possible d'assurer un transfert régulier des particules solides d'une zone à l'autre en ajustant ces prélèvements en fonction des pressions mesurées à l'intérieur des différentes zones.

Les particules solides en suspension dans le lit fluidifié rotatif sont soumises à des variations périodiques de vitesses et de pressions, à une fréquence d'environ 100 cycles par secondes, si la distance entre les ouvertures d'injection de fluide est d'environ 20 cm, ce qui assure un très bon transfert calorifique entre le gaz et les particules solides généralement poreuses, ce qui permet d'évacuer la chaleur de polymérisation de 25 tonnes par heure, ce qui augmente la température du gaz d'un peu moins de 30°C degrés centigrade, presque totalement compensés par son refroidissement généré par son expansion au travers du lit fluidifié. Ceci permet d'avoir des conditions de température relativement constante à l'intérieur de chaque zone annulaire.

Au rythme de polymérisation de 25 t/h, le temps de résidence des particules solides est en moyenne de 12 minutes durant lesquelles leur taille va croître par exemple de 25 à 250 microns. Si les particules catalytiques sont introduites d'un côté et évacuées de l'autre côté, la taille moyenne des particules solides à l'intérieur de chaque zone annulaire va évoluer progressivement. Les conditions cinétiques du gaz et du lit fluidifié à l'intérieur de chaque zone sont déterminées par les dimensions des ouvertures d'injection et d'évacuation du fluide dans ces zones. Elles peuvent donc être fixées en fonction de l'évolution moyenne de la granulométrie du lit fluidifié d'une zone à l'autre.

Les débits de gaz pouvant être extrêmement élevés, ce procédé est particulièrement adapté à l'utilisation de petites particules catalytiques très actives et nécessitant de travailler à basse pression.

A titre de comparaison, un réacteur de même capacité à lit fluidifié classique a généralement un volume 5 fois plus grand et travaille à des pressions 10 fois plus élevées, ce qui ne permet pas l'utilisation d'octène à l'état gazeux et ce qui augmente sont coût de construction et le risque industriel en cas d'accident. Il nécessite l'injection d'un gaz neutre, généralement sous la forme liquide, pour améliorer le refroidissement et réduire la vitesse de réaction, ce qui augmente son coût d'utilisation. Le temps de résidence moyen des particules de polyéthylène est généralement de plus d'une heure, ce qui augmente le coût des transitions entre la fabrication de qualités différentes.

## Revendications

1. Dispositif à lit fluidifié rotatif comprenant:
- un dispositif d'alimentafion dans une chambre circulaire (44) d'un ou plusieurs fluides, gazeux ou liquides, disposé autour de la paroi circulaire extérieure (2), fixe ou rotative, de ladite chambre circulaire (44) et un dispositif d'évacuation permettant d'évacuer centralement le ou lesdits fluides,
- un dispositif d'alimentation de particules solides (6) dans ladite chambre circulaire et un dispositif d'évacuation desdites particules solides, **caractérisé en ce que**:
- ledit dispositif d'alimentation du ou desdits fluides comprend des ouvertures d'injection (3) de fluide (11) traversant ladite paroi circulaire extérieure (2) permettant d'injecter le ou lesdits fluides, dans une direction dont la composante principale est tangente à la dite paroi circulaire (2),
- ledit dispositif d'évacuation du ou desdits fluides comprend un tube central rotatif (7) traversant ou pénétrant longitudinalement à l'intérieur de ladite chambre circulaire (44), ledit tube central rotatif (7) comprenant une ou des ouvertures d'évacuation (9) traversant la paroi dudit tube central permettant d'évacuer centralement le ou lesdits fluides (13) de ladite chambre circulaire, par ledit tube central rotatif.

2. Dispositif suivant la revendication 1, **caractérisé en ce que** la paroi circulaire extérieure (2) de ladite chambre circulaire (44) est fixée au dit tube central rotatif (7) délimitant ainsi une chambre annulaire rotative (44) et **en ce que** les ouvertures d'injection de fluide traversant ladite paroi circulaire extérieure sont orientées dans le sens inverse du sens de rotation de la paroi circulaire extérieure et du tube central rotatif

3. Dispositif suivant la revendication 1, **caractérisé en ce que** ledit tube central rotatif comprend des palettes, aubes ou ailettes permettant d'entraîner dans un mouvement de rotation la couche de fluide autour dudit tube central rotatif.

4. Dispositif suivant l'une quelconque des revendications précédentes, **caractérisé en ce que** la ou lesdites ouvertures d'évacuation (9) sont délimitées par une ou des aubes creuses (7) pouvant être alimentées en fluides au travers d'un tube central (25.1) pouvant servir d'arbre de transmission et **en ce que** les dites aubes creuses (7) comprennent des ouvertures (10) permettant d'injecter le ou les dits fluides (12) dans la direction de rotation (47) dans le dit tube central rotatif.

5. Dispositif suivant l'une quelconque des revendications précédentes, **caractérisé en ce que** la ou lesdites ouvertures d'évacuation (9) sont délimitées par des aubes (7) dont la distance (240) séparant l'extrémité extérieure d'une dite aube de l'aube suivante est inférieure à la distance entre ladite extrémité extérieure et ladite paroi circulaire extérieure.

6. Dispositif suivant l'une quelconque des revendications précédentes, **caractérisé en ce qu'**il comprend une chambre fixe d'alimentation à l'intérieur de laquelle se trouve ladite chambre circulaire et **en ce que** ladite chambre fixe d'alimentation est divisée en au moins deux zones annulaires alimentables en fluide séparément.

7. Dispositif suivant l'une quelconque des revendications précédentes, **caractérisé en ce que** ledit tube central rotatif est divisé en au moins deux zones reliées à des dispositifs séparés d'évacuation des fluides.

8. Dispositif suivant la revendication 7, **caractérisé en ce que** ledit dispositif d'évacuation desdits fluides comprenant ledit tube central rotatif muni de dites palettes, aubes ou ailettes comprend également au moins un tube fixe (30) concentrique et extérieur au dit tube rotatif, traversant au moins une dite section annulaire de ladite chambre circulaire et muni d'au moins une ouverture permettant d'évacuer centralement et séparément le ou lesdits fluides provenant de ladite section annulaire, lesdites palettes ou ailettes fixées sur ledit tube central rotatif étant prolongées pour pouvoir tourner autour et à l'extérieur d'au moins une partie dudit tube fixe, permettant ainsi de faire tourner la couche de fluide entourant ledit tube fixe.

9. Dispositif suivant l'une quelconque des revendications précédentes, **caractérisé en ce qu'**il comprend au moins un disque annulaire (49) fixé sur ledit tube central rotatif ou aux dites palettes, aubes ou ailettes, permettant de séparer lesdits fluides qui traversent ledit lit fluidifié rotatif et pénètrent de chaque côté du disque annulaire dans ledit tube central rotatif ou ledit tube fixe concentrique.

10. Dispositif suivant l'une quelconque des revendications précédentes, **caractérisé en ce que** ledit dispositif d'alimentation desdites particules solides injecte lesdites particules solides d'un côté de ladite chambre circulaire et **en ce que** ledit dispositif d'évacuation desdites particules solides évacue les particules solides de l'autre côté de ladite chambre circulaire, ou **en ce que** ledit dispositif d'alimentation desdites particules solides injecte lesdites particules solides dans la partie centrale de ladite chambre circulaire et **en ce que** ledit dispositif d'évacuation desdites particules solides évacue les particules solides aux deux extrémités de ladite chambre circulaire, ou **en ce que** ledit dispositif d'alimentation desdites particules solides injecte lesdites particules solides aux deux extrémités de ladite chambre circulaire et **en ce que** ledit dispositif d'évacuation desdites particules solides évacue les particules solides au centre de ladite chambre circulaire.

11. Dispositif suivant l'une quelconque des revendications précédentes, **caractérisé en ce qu'**il comprend au moins un élément permettant de déplacer longitudinalement lesdites particules solides choisi parmi les déflecteurs ou spires ou fractions de spires hélicoïdales fixés le long de ladite paroi circulaire ou dudit tube central rotatif et les ouvertures d'injection de fluide permettant d'injecter un fluide dans une direction ayant une composante longitudinale.

12. Dispositif suivant l'une quelconque des revendications précédentes, **caractérisé en ce que** le ou lesdits fluides sont des gaz et **en ce qu'**il comprend un dispositif de pulvérisation d'un liquide permettant de pulvériser ledit liquide sur au moins une partie de la surface dudit lit fluidifié ou à l'intérieur dudit tube central rotatif ou dudit tube concentrique fixe.

13. Procédé choisi parmi les procédés de polymérisation catalytique en ce compris des oléfines, de combustion, de gazéification, d'imprégnation, d'enrobage, de séchage et autres traitements de particules solides en suspension dans un lit fluidifié ou de transformation catalytique de fluides traversant un lit fluidifié, **caractérisé en ce qu'**il utilise le dispositif à lit fluidifié rotatif suivant l'une quelconque des revendications de 1 à 12.

14. Procédé suivant la revendication 13, **caractérisé en ce qu'**il comprend les étapes qui consistent à injecter un liquide en fines gouttelettes sur lesdites particules solides et à faire réagir chimiquement ou physiquement ledit liquide imprégnant ou entourant lesdites particules avec le ou lesdits fluides gazeux traversant ledit lit fluidifié rotatif.

15. Utilisation du dispositif décrit dans l'une quelconque des revendications de 1 à 12 dans un procédé de transformation de particules solides en suspension dans un lit fluidifié choisi parmi les procédés de polymérisation de particules solides catalytiques, les procédés d'imprégnation, d'enrobage, de séchage, d'extraction de composants volatils, de gazéification, de combustion de biomasses ou autres particules solides carbonées, ou dans un procédé de transformation catalytique d'un fluide ou mélange de fluides traversant le lit fluidifié rotatif dont les particules solides sont des catalyseurs.

## Patentansprüche

1. Vorrichtung mit rotierendem Wirbelbett, umfassend:
- eine Versorgungsvorrichtung in eine kreisrunde Kammer (44) eines oder mehrerer gasförmiger oder flüssiger Fluide, die um die starre oder rotierende kreisrunde Außenwand (2) der kreisrunden Kammer (44) angeordnet ist und eine Ableitungsvorrichtung, die es erlaubt, das oder die Fluide zentral abzuleiten,
- eine Versorgungsvorrichtung fester Partikel (6) in die kreisrunde Kammer und eine Ableitungsvorrichtung der festen Partikel, **dadurch gekennzeichnet, dass**:
- die Versorgungsvorrichtung des oder der Fluide Einspritzöffnungen (3) von Fluid (11) umfasst, die die kreisrunde Außenwand (2) durchqueren, die es erlauben, das oder die Fluide in eine Richtung einzuspritzen, deren Hauptkomponente zu der kreisrunden Wand (2) tangential ist,
- wobei die Ableitungsvorrichtung des oder der Fluide ein rotierendes zentrales Rohr (7) umfasst, das die kreisrunde Kammer (44) durchquert oder längs in sie eindringt, wobei das rotierende zentrale Rohr (7) eine oder Ableitungsöffnungen (9) umfasst, die die Wand des zentralen Rohrs durchqueren, die es erlauben, das oder die Fluide (13) aus der kreisrunden Kammer durch das rotierende zentrale Rohr zentral abzuleiten.

2. Vorrichtung nach Anspruch 1, **dadurch gekennzeichnet, dass** die kreisrunde Außenwand (2) der kreisrunden Kammer (44) am rotierenden zentralen Rohr (7) befestigt ist und damit eine rotierende kreisrunde Kammer (44) begrenzt und dass die Fluideinspritzöffnungen, die die kreisrunde Außenwand durchqueren, in die zur Rotationsrichtung der kreisrunden Außenwand und des rotierenden zentralen Rohrs umgekehrte Richtung angeordnet sind.

3. Vorrichtung nach Anspruch 1, **dadurch gekennzeichnet, dass** das rotierende zentrale Rohr Flügel, Schaufeln oder Blätter umfasst, die es erlauben, die Fluidschicht um das rotierende zentrale Rohr in einer Rotationsbewegung anzutreiben.

4. Vorrichtung nach einem der vorangehenden Ansprüche, **dadurch gekennzeichnet, dass** die Ableitungsöffnung(en) (9) durch eine hohle oder hohle Schaufel(n) (7) begrenzt sind, die durch ein zentrales Rohr (25.1), das als Übertragungswelle dienen kann, mit Fluiden versorgbar sind, und dass die hohlen Schaufeln (7) Öffnungen (10) umfassen, die es erlauben, das oder die Fluide (12) in die Rotationsrichtung (47) in das rotierende zentrale Rohr einzuspritzen.

5. Vorrichtung nach einem der vorangehenden Ansprüche, **dadurch gekennzeichnet, dass** die Ableitungsöffnung(en) (9) von Schaufeln (7) begrenzt sind, deren Abstand (240), der das äußere Ende einer Schaufel von der nächsten Schaufel trennt, kleiner ist als der Abstand zwischen dem äußeren Ende und der kreisrunden Außenwand.

6. Vorrichtung nach einem der vorangehenden Ansprüche, **dadurch gekennzeichnet, dass** sie eine starre Versorgungskammer umfasst, in der sich die kreisrunde Kammer befindet und dass die Versorgungskammer in mindestens zwei ringförmige Zonen unterteilt ist, die getrennt mit Fluid versorgbar sind.

7. Vorrichtung nach einem der vorangehenden Ansprüche, **dadurch gekennzeichnet, dass** das rotierende zentrale Rohr in mindestens zwei Zonen unterteilt ist, die mit getrennten Fluid-Ableitungsvorrichtungen verbunden sind.

8. Vorrichtung nach Anspruch 7, **dadurch gekennzeichnet, dass** die Ableitungsvorrichtung der Fluide, die das rotierende zentrale Rohr umfasst, das mit Flügeln, Schaufeln oder Blättern ausgestattet ist, ebenfalls mindestens ein starres Rohr (30) umfasst, das konzentrisch und außerhalb zu dem rotierenden Rohr ist, das mindestens einen ringförmigen Sektor der kreisrunden Kammer durchquert und mit mindestens einer Öffnung ausgestattet ist, die es erlaubt, das oder die Fluide, die von dem ringförmigen Sektor kommen, zentral und getrennt abzuleiten, wobei die Flügel oder Blätter, die auf dem rotierenden zentralen Rohr befestigt sind, verlängert sind, um um und außerhalb mindestens eines Teils des starren Rohrs rotieren zu können, wodurch erlaubt wird, die Fluidschicht, die das starre Rohr umgibt, zum Drehen zu bringen.

9. Vorrichtung nach einem der vorangehenden Ansprüche, **dadurch gekennzeichnet, dass** sie mindestens eine ringförmige Scheibe (49) umfasst, die auf dem rotierenden zentralen Rohr oder auf den Flügeln, Schaufeln oder Blättern befestigt ist, die erlaubt, die Fluide, die das rotierende Wirbelbett durchqueren und von jeder Seite der ringförmigen Scheibe in das rotierende zentrale Rohr oder in das starre konzentrische Rohr eindringen, zu trennen.

10. Vorrichtung nach einem der vorangehenden Ansprüche, **dadurch gekennzeichnet dass** die Versorgungsvorrichtung der festen Partikel die festen Partikel von einer Seite der kreisrunden Kammer einspritzt und dass die Ableitungsvorrichtung der festen Partikel die festen Partikel auf der anderen Seite der kreisrunden Kammer ableitet, oder dass die Versorgungsvorrichtung der festen Partikel die festen Partikel in den zentralen Teil der kreisrunden Kammer einspritzt und dass die Ableitungsvorrichtung der festen Partikel die festen Partikel an den zwei Enden der kreisrunden Kammer ableitet, oder dass die Versorgungsvorrichtung der festen Partikel die festen Partikel an den zwei Enden der kreisrunden Kammer einspritzt und dass die Ableitungsvorrichtung der festen Partikel die festen Partikel im Zentrum der kreisrunden Kammer ableitet.

11. Vorrichtung nach einem der vorangehenden Ansprüche, **dadurch gekennzeichnet dass** sie mindestens ein Element umfasst, das erlaubt, die festen Partikel längs zu verlagern, das aus den Deflektoren oder schraubenförmigen Windungen oder Windungsfraktionen ausgewählt ist, die entlang der kreisrunden Wand oder des rotierenden zentralen Rohrs befestigt sind, und die Fluid-Einspritzöffnungen, die erlauben, ein Fluid in eine Richtung einzuspritzen, die eine Längskomponente hat.

12. Vorrichtung nach einem der vorangehenden Ansprüche, **dadurch gekennzeichnet dass** das oder die Fluide Gase sind und dass sie eine Sprühvorrichtung einer Flüssigkeit umfasst, die es erlaubt, die Flüssigkeit auf mindestens einen Teil der Fläche des Wirbelbetts oder in das Innere des rotierenden zentralen Rohrs oder des starren konzentrischen Rohrs zu sprühen.

13. Verfahren, das aus den katalytischen Polymerisationsverfahren, darin eingeschlossen der Olefine, Vergasungs-, Imprägnierungs-, Beschichtungs-, Trocknungsverfahren und anderen Verarbeitungen von festen Partikeln in Suspension in einem Wirbelbett oder der katalytischen Transformation von Fluiden, die ein Wirbelbett durchqueren, ausgewählt ist, **dadurch gekennzeichnet, dass** es die Vorrichtung mit rotierendem Wirbelbett nach einem der Ansprüche 1 bis 12 verwendet.

14. Verfahren nach Anspruch 13, **dadurch gekennzeichnet, dass** es die Schritte umfasst, die darin bestehen, eine Flüssigkeit in kleinen Tropfen auf die festen Partikel einzuspritzen und die Flüssigkeit, die die Partikel imprägniert oder umgibt, mit dem oder den gasförmigen Fluiden, die das rotierende Wirbelbett durchqueren, chemisch oder physikalisch reagieren zu lassen.

15. Verwendung der in einem der Ansprüche 1 bis 12 beschriebenen Vorrichtung in einem Verfahren zur Umwandlung von festen Partikeln in Suspension in einem fluidisierten Bett, das aus den katalytischen Polymerisationsverfahren fester Partikel, den Imprägnierungs-, Beschichtungs-, Trocknungs-, Extraktionsverfahren volatiler Komponenten, Vergasungs-, Verbrennungsverfahren von Biomassen oder anderer kohlenstoffhaltiger Partikel oder aus einem Verfahren der katalytischen Umwandlung eines Fluids oder Fluidgemischs, dass das rotierende Wirbelbett durchquert, dessen feste Partikel Katalysatoren sind, ausgewählt ist.

## Claims

1. A rotary fluidized-bed device comprising:
- a device for supplying one or more gaseous or liquid fluids in a circular chamber (44), said device being positioned around the stationary or rotary outer circular wall (2) of said circular chamber (44), and a discharge device making it possible to discharge said fluid(s) centrally,
- a device for supplying solid particles (6) in said circular chamber and a device for discharging said solid particles, **characterized in that**:
- said device for supplying said fluid(s) comprises fluid (11) injection openings (3) passing through said outer circular wall (2) making it possible to inject said fluid(s), in a direction whereof the primary component is tangential to said circular wall (2),
- said device for discharging said fluid(s) comprises a rotary central tube (7) crossing through or longitudinally penetrating inside said circular chamber (44), said rotary central tube (7) comprising one or more discharge openings (9) crossing through the wall of said central tube making it possible to discharge said fluid(s) (13) centrally from said circular chamber, through said rotary central tube.

2. The device according to claim 1, **characterized in that** the outer circular wall (2) of said circular chamber (44) is fixed to said rotary central tube (7), thereby delimiting a rotary annular chamber (44), and **in that** the fluid injection openings passing through said outer circular wall are oriented in the direction opposite the direction of rotation of the outer circular wall and the rotary central tube.

3. The device according to claim 1, **characterized in that** said rotary central tube comprises cutting blades, vanes or fins making it possible to drive the layer of fluid in a rotational movement around said rotary central tube.

4. The device according to any one of the preceding claims, **characterized in that** said discharge opening(s) (9) are delimited by one of the hollow vanes (7) that may be supplied with fluids through a central tube (25.1) that may serve as a transmission shaft, and **in that** said hollow vanes (7) comprise openings (10) making it possible to inject said fluid(s) (12) in the direction of rotation (47) in said rotary central tube.

5. The device according to any one of the preceding claims, **characterized in that** said discharge opening(s) (9) are delimited by vanes (7) whereof the distance (240) separating the outer end of one said vane from the following vane is smaller than the distance between said outer end and said outer circular wall.

6. The device according to any one of the preceding claims, **characterized in that** it comprises a stationary supply chamber inside which said circular chamber is located, and **in that** said stationary supply chamber is divided into at least two annular zones that can be supplied with fluids separately.

7. The device according to any one of the preceding claims, **characterized in that** the rotary central tube is divided into at least two zones connected to separate discharge devices for the fluids.

8. The device according to claim 7, **characterized in that** said discharge device for said fluids comprising the rotary central tube provided with said cutting blades, vanes or fins also comprises at least one concentric stationary tube (30) outside said rotary tube, passing through at least one said annular section of said circular chamber and provided with at least one opening making it possible to centrally and separately discharge said fluid(s) coming from said annular section, said cutting blades or fins fixed on the rotary central tube being extended to be able to rotate around and outside at least part of said stationary tube, thereby making it possible to rotate the layer of fluid surrounding said stationary tube.

9. The device according to any one of the preceding claims, **characterized in that** it comprises at least one annular disc (49) fixed on said rotary central tube or to said cutting blades, vanes or fins, making it possible to separate said fluids that pass through said rotary fluidized bed and penetrate each side of the annular disc in the rotary central tube or the concentric stationary tube.

10. The device according to any one of the preceding claims, **characterized in that** said device for supplying said solid particles injects said solid particles on one side of said circular chamber and **in that** the discharge device for discharging said solid particles discharges the solid particles from the other side of the circular chamber; or in that the device for supplying the solid particles injects said solid particles into the central part of the circular chamber and the device for discharging the solid particles discharges said solid particles at both ends of said circular chamber; or **in that** the device for supplying said solid particles injects the solid particles at both ends of the circular chamber and the device for discharging said solid particles discharges the solid particles at the center of the circular chamber.

11. The device according to any one of the preceding claims, **characterized in that** it comprises at least one element making it possible to move said solid particles longitudinally chosen from among deflectors or coils or helical coil fractions fixed along said circular wall or said rotary central tube and the fluid injection openings making it possible to inject a fluid in a direction having a longitudinal component.

12. The device according to any one of the preceding claims, **characterized in that** said fluid(s) are gases and **in that** it comprises a device for spraying a liquid making it possible to spray said liquid on at least part of the surface of the fluidized bed or inside said rotary central tube or said stationary concentric tube.

13. A method chosen from among catalytic polymerization methods, including olefins, combustion, gasification, impregnation, coating, drying and other treatments of solid particles suspended in a fluidized bed or catalytic transformation of fluids passing through a fluidized bed, **characterized in that** it uses the rotary fluidized-bed device according to any one of claims 1 to 12.

14. The method according to claim 13, **characterized in that** it comprises steps consisting of injecting a liquid in fine droplets on said solid particles and chemically or physically reacting said liquid impregnating or surrounding said particles with said gaseous fluid(s) passing through said rotary fluidized bed.

15. A use of the device described in any one of claims 1 to 12 in a method for transforming solid particles suspended in a fluidized bed chosen from among catalytic solid particle polymerization methods; impregnation, coating, drying, volatile component extraction, gasification, biomass or other solid carbonaceous particle combustion methods; or in a method for the catalytic transformation of a fluid or mixture of fluids passing through the rotary fluidized bed whereof the solid particles are catalysts.
